Europäisches Patentamt

**European Patent Office**

Office européen des brevets

(19)

(11)  **EP 1 049 916 B1**

(12)   **EUROPÄISCHE PATENTSCHRIFT**

(45)  Veröffentlichungstag und Bekanntmachung des Hinweises auf die Patenterteilung:
**05.06.2002   Patentblatt 2002/23**

(51)  Int Cl.[7]:  **G01L 1/24**, E05F 15/00

(21)  Anmeldenummer: **99932442.9**

(22)  Anmeldetag: **21.01.1999**

(86)  Internationale Anmeldenummer:
**PCT/EP99/00376**

(87)  Internationale Veröffentlichungsnummer:
**WO 99/37982 (29.07.1999 Gazette 1999/30)**

(54)  **FASEROPTISCHER KRAFTSENSOR, VERWENDUNG ZUR SCHLIESSAKANTENÜBERWACHUNG, UND HERSTELLUNGSVERFAHREN**

FIBRE-OPTIC FORCE SENSOR, USE OF THE SENSOR FOR MONITORING CLOSING EDGES AND METHOD FRO PRODUCING SAID SENSOR

DETECTEUR DE FORCE A FIBRES OPTIQUES, UTILISATION DUDIT DETECTEUR POUR SURVEILLER DES ARETES DE FERMETURE, ET PROCEDE POUR LA PRODUCTION DUDIT DETECTEUR

(84)  Benannte Vertragsstaaten:
**AT BE CH CY DE DK ES FI FR GB GR IE IT LI LU MC NL PT SE**

(30)  Priorität: **21.01.1998  DE 19801961**

(43)  Veröffentlichungstag der Anmeldung:
**08.11.2000   Patentblatt 2000/45**

(73)  Patentinhaber: **Deutsches Zentrum für Luft- und Raumfahrt e.V.**
**53175 Bonn (DE)**

(72)  Erfinder:
• **Schmidt, Markus**
**31137 Hildesheim (DE)**
• **Fürstenau, Norbert**
**38104 Braunschweig (DE)**

(74)  Vertreter: **Einsel, Martin, Dipl.-Phys. Patentanwalt,**
**Jasperallee 1A**
**38102 Braunschweig (DE)**

(56)  Entgegenhaltungen:
EP-A- 0 675 255          DE-A- 3 439 809
DE-A- 3 443 949          DE-A- 4 226 134
US-A- 4 669 814          US-A- 4 929 050
US-A- 5 241 300

• A.C. BOUCOUVALAS ET AL.: "D-SHAPED OPTICAL FIBRE FOR SENSING APPLICATIONS" PROCEEDINGS SPIE - THE INTERNATIONAL SOCIETY FOR OPTICAL ENGINEERING - FIBER OPTIC SENSORS II, Bd. 798, 31. März 1987 - 3. April 1987, Seiten 370-375, XP002105107 THE HAGUE (NL)
• PATENT ABSTRACTS OF JAPAN vol. 7, no. 41 (M-194), 18. Februar 1983 & JP 57 191122 A (NISSAN JIDOSHA KK), 24. November 1982
• M.H. CORDARO ET AL.: "PRECISION FABRICATION OF D-SHAPED SINGLE-MODE OPTICAL FIBERS BY IN SITU MONITORING" JOURNAL OF LIGHTWAVE TECHNOLOGY., Bd. 12, Nr. 9, September 1994, Seiten 1524-1531, XP000484331 NEW YORK US

EP 1 049 916 B1

**Beschreibung**

Die Erfindung betrifft einen faseroptischen Sensor für Druck- und Krafteinflüsse, eine Verwendung dieses Sensors in einer Detektionseinrichtung zur Schließkantenüberwachung und/oder zum Überwachen des Schließvorganges von Türen und Industrietoren, ein Verfahren zum Herstellen einer solchen Detektionseinrichtung sowie ein Verfahren zur Schließkantenüberwachung und/oder zum Überwachen des Schließvorganges der Türen mittels Detektionseinrichtung, insbesondere hergestellt nach dem besagten Verfahren.

Die DE 33 11 524 A1 beschreibt einen faseroptischen Sensor für Kraft- und Druckmessungen. Hierzu wird eine Monomode-Lichtleitfaser aus Glas eingesetzt. Auf diese Glasfaser wirkt senkrecht zur Längsachse eine Kraft oder ein Druck. Durch die Glasfaser wird polarisiertes Licht geschickt und die Änderung des Polarisationszustandes wird zur Auswertung und Messung von Kraft und Druck herangezogen. Ein solcher Vorschlag ist sehr anspruchsvoll und recht kostspielig, zumal auch eine hochempfindliche Auswerteelektronik eingesetzt werden muss.

A. C. Boucouvalas, M. P. Greaves und N. S. Rayit, "D Shaped Optical Fibre for Sensing Applications", in: SPIE Fiber Optic Sensors II, Vol. 798 (1987), Seiten 370 - 375 haben eine derartige Monomode-Faser mit einem D-förmigen Querschnitt versehen und stellten fest, dass die Dämpfung bzw. Rückstreuung bei periodischer Mikrobiegung der Faser erheblich stärker wird als bei kreisförmigem Querschnitt und dass interessante Polarisationseffekte auftreten. Wesentlich ist die Periodizität der Mikrobiegung. Für nichtperiodische Deformierungen ist dieses Konzept nicht geeignet und auch nicht vorgesehen; es handelt sich außerdem um einen teuren Aufbau für reine Forschungszwecke.

M. H. Cordaro, D. L. Rode, T. S. Barry und R. R. Krchnavek, "Precision Fabrication of D-Shaped Single-Mode Optical Fibers by in Situ Monitoring", in: Journal of Lightwave Technology 12 (1994), Seiten 1524 bis 1531, schlagen für die Herstellung einer Monomode-Faser mit D-förmigem Querschnitt eine hochgenaue glatte Polierung mittels eines Zylinders vor.

Aus der US-PS 4,618,764 ist ein weiterer faseroptischer Druckdetektor bekannt. Dabei läuft um eine optische Faser helikal oder spiralförmig ein metallischer Draht, um den seinerseits eine im wesentlichen inkompressible metallische oder Kunststofffolie herumgewickelt ist. Diese Konstruktion wird nun zwischen zwei Klemmbacken gelegt und auf diese Klemmbacken wiederum Kraft ausgeübt. Aufgrund der helikalen Windungen entsteht nun eine periodische Deformation der Glasfaser, was zu einer Änderung der Transmissionsverluste von Licht in der Faser führt. Diese Verluste werden durch einen Detektor festgestellt. Auch diese Konzeption ist ausgesprochen kostspielig und nur für aufwendige Messeinrichtungen geeignet.

Die EP 0 419 267 B1 und die DE 690 19 652 T2 beschreiben eine Glasfaser als Lichtleitfaser. Die Glasfaser ist eine Multimodefaser, auf die durch Mikrobiegungen von außen Kräfte ausgeübt werden. Der Außendruck wird mittels eines Paars gegenüberliegender gezahnter Elemente ausgeübt. Das optische Signal wird in seiner Amplitude bei höherem Druck gedämpft oder gesperrt.

Es ist ebenfalls bekannt, in Lichtwellenleitern auf Quarzglas- oder Polymerbasis durch Biegung eine Dämpfung zu erzeugen. Biegungsverluste werden dabei um so größer, je kleiner der Biegeradius ist. Diese Biegungsverluste werden als Makrobiegungsverluste bezeichnet und beispielsweise in Faseroptischen Extensometern der Firma OSMOS-DEHA-COM genutzt. Dabei wird dieser Effekt durch Verdrillen mehrerer Multi-Mode Glasfasern über mehrere Meter Länge sehr stark vergrößert. Dieses Prinzip der auf Biegungsverlusten basierenden Sensoren wird beispielsweise bei Datenhandschuhen genutzt, welche als Mensch- Maschine-Schnittstelle dienen. Dabei wird die Krümmung der Finger detektiert und in Echtzeit als virtuelle Hand auf einem Bildschirm eines Computers dargestellt.

Es ist außerdem beispielsweise aus der JP 57-191 122 A bekannt, ganz allgemein Türüberwachungssensoren zur Schließkantenüberwachung beispielsweise bei Türen von Zügen, Fahrzeugen oder bei Industrietoren oder Eisenbahnwaggons einzusetzen. Dadurch sollen Verletzungen verhindert werden, die beispielsweise durch Einklemmen von während des Schließvorgangs noch in der Tür befindlichen Händen auftreten können, und zugleich auch das Zerstören des Türprofiles durch eventuell noch beim Schließvorgang zwischen Tür und Rahmen befindliche Gegenstände. Beispielsweise ist von der Firma FRABA ein Türüberwachungssensor bekannt, der aus zwei zylindrischen Gehäusen mit je einer Sende- Leuchtdiode und einer Empfangs- Photodiode besteht. Diese werden vom Anwender in die Enden eines Gummi- Hohlprofiles eingesetzt, das als Dämpfungs- und Dichtungselement an der Tür oder am Türrahmen angebracht ist. Die Länge der Lichtleitung im Gummi-Hohlprofil ist begrenzt, und die Ausrichtung von Sender und Empfänger sollte nicht zu sehr vom idealen koaxialen Fall abweichen. Dadurch können lediglich weniger stark gekrümmte Türprofile überwacht werden.

Der Erfindung liegt die Aufgabe zugrunde, einen faseroptischen Sensor für Druck- und Krafteinflüsse vorzuschlagen, der kostengünstig und für eine breite industrielle Anwendung geeignet sein soll. Ferner soll auch ein Verfahren zu seiner Herstellung vorgeschlagen werden und auch eine Verwendungsmöglichkeit angegeben werden.

Diese Aufgabe wird gelöst durch einen faseroptischen Sensor für Druck- und Krafteinflüsse, der eine lichtwellenleitende Multimode-Faser aufweist, wobei die Faser einen im Wesentlichen kreisförmigen Querschnitt besitzt, der durch Präparation oder Abtragen modifiziert ist, und wobei die Oberfläche des abgetragenen Bereiches der Faser aufgeraut oder mit einer Struktur versehen ist.

Ein Verfahren zum Herstellen des faseroptischen Sensors zeichnet sich zur Lösung der Aufgabe dadurch aus, dass die lichtwellenleitende Multimode-Faser bzw. die Multimode-Fasern so präpariert oder abgetragen werden, dass die Oberfläche des abgetragenen Bereiches der Faser aufgeraut oder mit einer Struktur versehen wird. Die Präparation und/oder das Abtragen erfolgen bevorzugt durch spanende Bearbeitung.

Der faseroptische Sensor ist besonders geeignet zur Verwendung in einer Detektionseinrichtung zur Schließkantenüberwachung und zum Überwachen des Schließvorgangs von Türen und Industrietoren. Dabei wird der faseroptische Sensor in eine Türkante integriert und/oder in ein die Tür umgebendes Trägerelement eingefügt.

Schließlich wird ein Verfahren zum Überwachen des Schließvorganges mittels der Detektionseinrichtung geschaffen, dadurch, dass ein faseroptischer Sensor in ein Trägerelement oder ein elastisches Leistenelement der Tür eingefügt wird, das durch Druckausübung auf das Leistenelement ein Signal des Sensorelementes, das die Signalintensität erfasst und ein Schwellwert abgefragt wird, und dass bei Über- oder Unterschreiten des Schwellwertes der Schließvorgang unterbrochen oder rückgängig gemacht wird.

Weiterbildungen der Erfindung sind in den jeweiligen abhängigen Ansprüchen definiert.

Durch die Erfindung entsteht ein faseroptischer Sensor für Druck- und Krafteinflüsse, der sehr kostengünstig herstellbar ist. Insbesondere ist er konfektionierbar, d. h. die empfindliche Länge von typischerweise mehreren Metern kann vom Anwender an die Länge des ihn interessierenden Abschnitts angepasst werden, in dem festgestellt werden soll, ob ein bestimmter Druck oder eine bestimmte Kraft ausgeübt wird.

Vorteilhafterweise kann eine Selbstüberwachung des faseroptischen Sensors durch die Messung des Dauerlichtpegels erfolgen. Dies kann auch dazu ausgenutzt werden, etwa einen Bruch oder einen Ausfall der lichterzeugenden oder detektierenden Mittel festzustellen, so dass ein funktionsuntüchtiger Sensor leicht festgestellt und gegebenenfalls ersetzt werden kann.

Besonders bevorzugt wird als Sensormaterial ein Polymerlichtwellenleiter in Faserform verwendet, wie er in anderem Zusammenhang in der optischen Kurzstreckennachrichtenübertragung Anwendung findet und daher preisgünstig zur Verfügung steht. Als Kunststoff wird bevorzugt Polymethylmethacrylat (PMMA) eingesetzt.

Besonders bevorzugt ist es, wenn durch die Präparation oder Bearbeitung des Lichtwellenleiters dieser im Querschnitt etwa D-förmig ist, also die Kreisform durch eine gerade Linie unterbrochen wird. Dabei sollte die Kreisform noch über den deutlich größeren Teil der Fläche erhalten bleiben.

Statt der bevorzugten spanenden Bearbeitung ist auch eine schleifende oder ähnliche möglich, wenn auch weniger bevorzugt. Irreversible Änderungen der Faserquerschnitte waren im Stand der Technik bisher noch nicht in Betracht gezogen worden.

Der erfindungsgemäße faseroptische Sensor kann insbesondere vorteilhaft zur Schließkantenüberwachung von Türen, z. B. von Industrietoren und Fahrzeugtüren in Eisenbahnwaggons, eingesetzt werden. Dabei wird z. B. detektiert, ob ein Gegenstand oder eine Person sich zwischen Tür und Rahmen befindet, so daß der Schließvorgang dann automatisch unterbrochen bzw. rückgängig gemacht wird. Es wird also eine Detektionseinrichtung zum Überwachen des Schließvorganges von Türen geschaffen, die es ermöglicht, einen unter Umständen mehrere Meter langen, gewinkelten oder gekrümmten Abschnitt einer Tür lückenlos überwachen zu können. Der empfindliche Abschnitt des Sensorelementes der Detektionseinrichtung ist dabei typischerweise mehrere Meter lang und kann vorteilhaft vom Anwender an die entsprechend gewünschte Länge des zu überwachenden Türabschnittes angepaßt werden.

Vorteilhaft ist die Detektionseinrichtung kostengünstig herzustellen und einfach zu montieren. Da sie selbstüberwachend ist, werden Manipulationsversuche angezeigt und zugleich der Schließvorgang abgebrochen und ein Alarm angezeigt. Besonders vorteilhaft erweist es sich auch, daß die Detektionseinrichtung kundenkonfektionierbar ist. Dadurch entfallen aufwendige Montagearbeiten, welche wiederum für den Kunden mit Kosten verbunden wären. Eine Längenanpassung an das entsprechend zu überwachende Tor oder die Tür oder ein ähnliches Element kann durch einfaches Kürzen des Sensorelemetes erfolgen.

Bei kurzen Entfernungen, beispielsweise bis zu 50 Metern, vom Sensor eignet sich die Detektionseinrichtung auch für die Verkehrstechnik, beispielsweise bei der Fahrbahnüberwachung in Flughafenbereichen. Der hierbei bekannte Stand der Technik geht von Intensitätsänderungen innerhalb von Glasfaserleitungen aus. Dabei werden mehrere Fasern miteinander verdrillt, wobei an den Fasern eine Zuglast wirkt, welche zu Intensitätsverlusten führt. Es ist dabei eine Zuleitung und eine Rückleitung aus Glasfasermaterial vorgesehen. Die Fasern werden auf einer periodisch gebundenen Unterlage fixiert und eine Drucklast auf sie ausgeübt, beispielsweise mittels einer Schraube. Dabei treten maximale mechanische Mikrobiegungsverluste auf. Solche Verluste können durch Modenkopplung noch verstärkt werden. Im Unterschied zur Nutzung der Makrobiegungsverluste wird erfindungsgemäß eine Nutzung der Mikrobiegungsverluste vorgesehen. Hierbei wird auch das Verhältnis der Krümmungsverluste zu den Übergangsverlusten ermittelt, welches von der jeweiligen Konfiguration der Gesamtanordung abhängt. Dabei erweist sich die Oberflächenbeschaffenheit der einzelnen aneinanderliegenden Fasern als besonders wichtig, weswegen eine Präparation der Fasern vorgenommen und der erhaltene Effekt dadurch noch verstärkt wird.

Das erfindungsgemäß vorgesehene Mantelelement dient der Reflexion mit einem niedrigen Brechungsindex des durch den Kern als Lichtleitung gesandten Lichtes. Durch Biegen des faseroptischen Drucksensorelementes entstehen Verluste, welche reproduzierbar groß sind. Es kann dabei eine Schaltschwelle der Detektionseinrichtung vorgesehen werden, beispielsweise kann diese auf einen zu überschreitenden Wert der Biegungsverluste von 10 - 20 % krümmungsradiusabhängig eingestellt werden.

Durch das Bearbeiten der Sensorelementfaser sowie das Vorsehen des Kontaktprinzipes als Faseroptischer Richtkoppler ist es möglich, bei Belastung des Sensorelementes Licht in eine jeweils andere, ebenfalls präparierte Faser einer Doppelfaser herüber zu koppeln.

Die beiden aneinanderliegenden Fasern sind dabei fest aufeinander aufgefügt.

Es hat sich gezeigt, daß durch das Präparieren der Fasern, beispielsweise durch Anschleifen, die erzielten Biegungsverluste größer werden. Es erweist sich als besonders vorteilhaft, die präparierte Oberfläche weniger glatt vorzusehen, da dadurch ebenfalls die Biegungsverluste vergrößert werden. Bei Vorsehen des Kontaktprinzipes, also von zwei aneinanderliegenden Fasern, ist ein besonders gutes Präparieren wichtig. Im Stand der Technik ist es zwar bekannt, insbesondere Glasfasern anzuätzen, dies kann jedoch bei Polymerlichtwellenleitern, wie sie bevorzugt erfindungsgemäß verwendet werden, nicht geschehen. Vorzugsweise werden daher die Polymerlichtwellenleiter durch Anschleifen präpariert. Zum Schaffen einer größeren Auskoppelwahrscheinlichkeit oder Dämpfung des Lichtes bei Faserbiegung kann auf die Oberfläche ein optisches Gitter aufgebracht werden. Dadurch wird eine vorbestimmte Periode der Änderung der optischen Eigenschaften erzeugt, wodurch der Lichtaustritt stärker wird.

Neben der besonders vorteilhaften Verbindung von Standardbauteilen der optischen Nachrichtentechnik, wie LED, Polymerlichtwellenleiter etc., erweist sich auch die Immunität gegen elektromagnetische Störungen als besonders vorteilhaft. Da die Detektionseinrichtung keine Bestandteile aufweist, welche elektromagnetisch erregbar sind, jedenfalls im Bereich des Sensorelementes, kann eine Störung des ordnungsgemäßen Betriebes der Detektionseinrichtung im wesentlichen ausgeschlossen werden. Bei der vorteilhaften Selbstüberwachung kann eine Ausfallanzeige durch sogenannte "Null-Intensität" vorgesehen werden, wobei der Dauerlichtpegel hinsichtlich seiner Intensität gemessen wird. Zu- und Rückleitung zum Sensorelement bzw. von diesem können vorteilhaft einfach über geeignete Steckverbindungen, beispielsweise einfache Metallhülsen, an den entsprechenden Abschnitt des Sensorelementes angeschlossen werden. Dieser wird vorteilhaft auf die entsprechend gewünschte Länge zugeschnitten.

Besonders bevorzugt wird ein vorbestimmt präparierter Abschnitt eines Sensorelementes, insbesondere eines Polymerlichtwellenleiters, in ein elastisches Material eingebettet, beispielsweise durch Eingießen in Silikonkautschuk. Dadurch wird der empfindliche Bereich durch Zu- und Rückleitungsfaser des Sensorelementes definiert. Eine Druckausübung auf eine beliebige Stelle, des in das elastische Material eingebetteten Sensorelementes erzeugt in dem gekrümmten Bereich des Sensorelementes oder Lichtwellenleiters Transmissionsverluste (Übergangs- und Biegungsverluste), welche sich in einer Reduzierung der gemessenen Intensität unter einen vorgewählten elektronisch eingestellten Schwellwert äußern.

Vorzugsweise wird als Material für das Sensorelement ein Polymer in Faserform verwendet, beispielsweise PMMA (Polymethylmethacrylat) mit einem Faserdurchmesser von einem Millimeter, wie er bei der optischen Nachrichtentechnik über kurze Entfernungen, also Entfernungen zwischen 10 und 15 Metern, vorzugsweise verwendet wird. Die Faser selbst besteht dabei aus einem insbesondere 0,98 mm dicken lichtführenden Faserkern und einem den Kern umgebenden 0,01 mm dickten Mantelelement. Die transparente Faser wird vorzugsweise von einer lichtabsorbierenden Isolierschicht ummantelt und geschützt. Der zum Messen verwendete Abschnitt des Sensorelementes der Polymerfaser wird durch eine entsprechend geeignete Präparation empfindlich gemacht, wodurch die auch ansonsten auftretenden Biegungsverluste zusätzlich um zumindest eine Größenordnung über denen der unpräparierten Faser liegen. Das Wirkprinzip der Detektionseinrichtung beruht darauf, daß bei der elektromagnetischen Feldtheorie zur Lichtausbreitung in optischen Wellenleitern die Feldstärkeverteilung nicht auf den eigentlich lichtführenden Faserkern beschränkt ist, sondern vielmehr ein sogenannter Überlapp der Lichtausbreitung in den Raum außerhalb des Kernes auftritt. Dieser Überlapp reicht bis in den Außenbereich des Lichtwellenleiters, sofern die Dicke des Mantelelementes des Lichtwellenleiters gering ist. Bei der Faserbiegung durch Druckausübung wird die Eindringtiefe der Feldverteilung in den Bereich außerhalb des Faserkernes erhöht, wodurch die ausbreitungsfähigen Moden an die Strahlungsmoden im Außenbereich ankoppeln. Dies äußert sich durch Biegungsverluste. Wird der Lichtwellenleiter geeignet präpariert, tritt eine Verstärkung der Ankopplung an die Strahlungsmoden deutlich hervor, was im Vergleich zur unbehandelten Faser zu signifikanter Verstärkung der Biegungsverluste führt. Dadurch können die Einwirkungen auf Zu- und Rückleitungsfaser von den Einwirkungen auf den Abschnitt des Sensorelementes, welcher zur Messung bestimmt ist, eindeutig unterschieden werden.

Die Vorteile der Erfindung bestehen in einer einfachen und preisgünstigen Lösung durch die Verwendung von Standardbauteilen der optischen Nachrichtentechnik, beispielsweise von lichtemittierenden Dioden (LEDS) und Polymerlichtwellenleitern. Der Sensor ist immun gegen elektromagnetische Störungen, Zu- und Rückleitungen sind einfach anschließbar, der Sensor ist durch Abschneiden auf benötigte Länge konfektionierbar und es entsteht eine Selbstüberwachung durch Ausfallanzeige aufgrund Nullintensität.

Bei einer bevorzugten Ausführungsform wird die Fläche des D-Querschnitts noch mit parallelen Rillen in einem kleinen Winkel zur Lichtwellenleiterlängsachse versehen. Dies fördert die Auskopplungsempfindlichkeit zusätzlich.

Die erfindungsgemäßen Sensoren können auch als Teil einer Schalteinrichtung eingesetzt werden, also nicht nur das Auftreten bestimmter Kräfte oder Drücke melden, sondern abhängig vom gemessenen oder gefühlten Ergebnis auch Reaktionen steuern oder regeln. Bei den erwähnten Detektionseinrichtungen für Schließkanten wird dies sofort augenfällig: Es kann eine Rückwärtsbewegung der an sich zum Schließen vorgesehenen Tür ausgelöst werden.

Auch bei anderen Einsatzbereichen, besonders dort, wo das Auftreten einer Kraft oder eines Druckes an einem beliebigen Punkt längs einer Linie stets zu der gleichen Reaktion führen soll, sind die Sensoren mit Nutzen verwendbar, vor allem dann, wenn es sich um Einsatzbereiche handelt, die keine kostenintensiven Sensoren erlauben. Zu denken ist beispielsweise an Begrenzungslinien auf Sportplätzen oder in Turnhallen, deren Berühren oder Betreten erkannt werden soll, oder auch im Straßenverkehrsbereich unter rauhen Bedingungen.

Zur näheren Erläuterung der Erfindung werden im folgenden Ausführungsbeispiele anhand der Zeichnungen beschrieben. Diese zeigen in:

Figur 1    eine erste Ausführungsform einer erfindungsgemäßen Detektionseinrichtung,

Figur 2    eine Ansicht einer ersten Ausführungsform eines erfindungsgemäß präparierten Sensorelementes mit Auftragung des Brechungsindexes als Potentialtopf, links der unbehandelten Faser und rechts der behandelten Faser,

Figur 3    eine Darstellung des Brechungsindexes bei Krümmung der Faser gemäß Figur 2, wobei der Effekt der Krümmung mittels einer mathematischen Prozedur (konforme Abbildung) in einen geraden Lichtwellenleiter transformierbar ist,

Figur 4    eine perspektivische Detailansicht einer Faser mit Faserabtrag,

Figur 5    eine perspektivische Darstellung einer ersten Herstellungsart der erfindungsgemäße abgetragenen Faser des Sensorelementes,

Figur 6    eine perspektivische Detailansicht einer zweiten Ausführungsform eines erfindungsgemäß präparierten Sensorelementes,

Figur 7    eine perspektivische Ansicht einer Vorrichtung zum Präparieren des Sensorelementes gemäß Figur 6,

Figur 8    eine Darstellung des Meßergebnisses mit Drucksensorelement in einer Temperaturkammer, wobei die Intensität des gemessenen Signales bei periodischer Be- und Entlastung dargestellt ist,

Figur 9    eine Ansicht eines Diagramms mit Auftragung von Temperatur- und Signalkurven über der Zeit,

Figur 10   eine Prinzipskizze einer zweiten Ausführungsform einer erfindungsgemäßen Detektionseinrichtung,

Figur 11   eine Prinzipskizze einer dritten Ausführungsform einer erfindungsgemäßen Detektionseinrichtung,

Figur 12   eine Prinzipskizze einer vierten Ausführungsform einer erfindungsgemäßen Detektionseinrichtung,

Figur 13   eine perspektivische Ansicht einer weiteren Ausführungsform eines erfindungsgemäßen Sensorelementes als Doppelfaser,

Figur 14   eine perspektivische Ansicht einer einzelnen Faser der Ausführungsform gemäß Figur 13;

Figur 15   einen vergrößerten Ausschnitt eines erfindungsgemäßen Sensorelementes während einer alternativen Herstellung ähnlich Figur 5;

Figur 16   die bei einem Verfahren nach Figur 15 entstehende Faser ähnlich Figur 4;

Figur 17   die Darstellung der Rauheit abhängig von der Meßstrecke quer zur Faserachse eines erfindungsgemäßen Sensorelements;

Figur 18   eine Darstellung der Amplitude in Abhängigkeit von der Ortsfrequenz;

Figur 19   zwei typische Meßkurven bei periodischer Belastung der Sensorfaser mit der Mikrostrukturierung aus Figur 18.

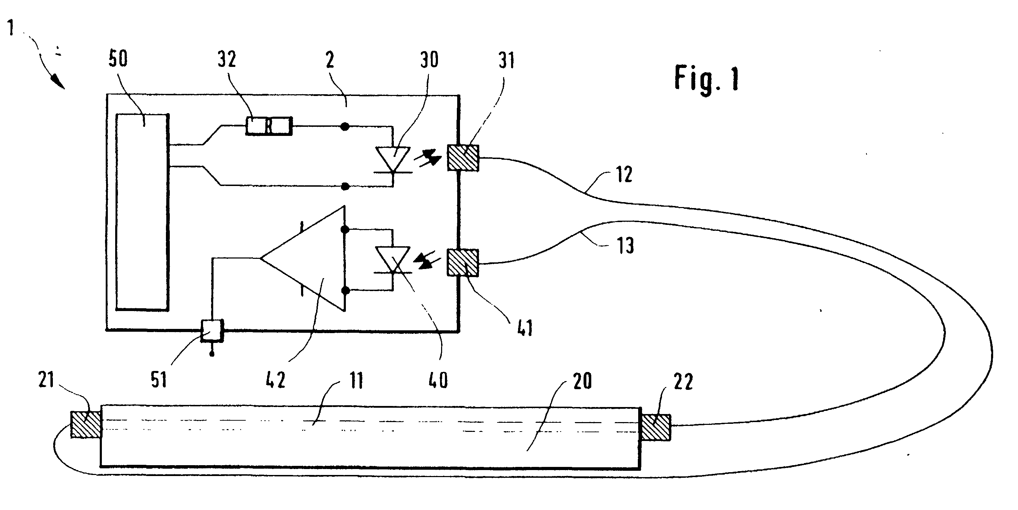

In **Figur 1** ist eine erste Ausführungsform einer erfindungsgemäßen Detektionseinrichtung 1 als Prinzipskizze dargestellt. Die Detektionseinrichtung weist eine Schaltungseinheit 2 auf. An die Schaltungseinheit 2 ist ein faseroptischer Sensor mit einem Sensorelement 10 in Form der Zuleitung 12 und der Rückleitung 13 angeschlossen. Der Anschluß erfolgt über entsprechende Anschlußelemente 31, 41. Die beiden Leitungen oder Fasern 12, 13 des Sensorelementes 10 sind miteinander durch einen Abschnitt 11 verbunden. Dieser ist in ein Trägerelement oder ein Leistenelement 20 eingelagert. Die Zuleitungsfaser 12 ist über das Anschlußelement 21 und die Rückleitungsfaser 13 über das Anschlußelement 22 mit dem Leistenelement 20 und dem Abschnitt 11 verbunden.

Die beiden Anschlußelemente 31 und 41 sind jeweils als Empfangs- und Sendeelement ausgelegt. Das Sensorelement wird nämlich von einer Leuchtdiode oder LED 30 mit Licht gespeist. Um das von der LED 30 ausgesandte Licht auffangen zu können, ist das Anschlußelement 31 als Empfangselement ausgebildet. Die Leuchtdiode oder LED wird über einen Widerstand 32 von einer Stromversorgung 50 versorgt.

Das durch die Rückleitungsfaser 13 zur Schaltungseinheit 2 zurückgeleitete Lichtsignal wird einer in der Schaltungseinheit vorgesehenen Photodiode 40 durch den als Sendeelement ausgebildeten Anschluß 41 aufgegeben. Um das aufgenommene Signal am Ausgang 51 abgreifen zu können, wird es zuvor über einen Vorverstärker 42 gesandt.

Mit dieser Ausführungsform wird die transmittierte Signal-Intensität registriert, also diejenige Intensität, welche nach Durchqueren des Abschnittes 11 des Sensorelementes 10 am Ausgang 51 gemessen werden kann.

Das Leistenelement 20 ist beispielsweise eine elastische Dichtung, welche an einer Tür und/oder an einem Türrahmen befestigt ist. Sie kann insbesondere aus einem elastischen Gummimaterial bestehen.

Tritt nun auf Grund eines noch zwischen Tür und Rahmen befindlichen Gegenstandes oder einer Person eine Druckkraft auf, welche auf den Abschnitt 11 wirkt, wird dieser in diesem Bereich gebogen. Im strahlenoptischen Bild der Lichtausbreitung in optischen Wellenleitern wird die über eine Eigenwertgleichung beschriebene Ausbreitungsbedingung bei Faserbiegung für Moden mit höheren Modenzahlen nicht mehr erfüllt. Dies betrifft die Strahlen, welche in steileren Winkeln auf die Kernelement- Mantelelement-Grenzfläche treffen. Diese Strahlen erfüllen nämlich nicht mehr die Forderung nach Totalreflexion. Es entstehen die gewünschten Biegeverluste.

Im Rahmen des Formalismus der Ausbreitung elektromagnetischer Felder in Lichtwellenleitern ist der weiter oben bereits genannte Überlapp der Feldverteilung für hohe Modenzahlen, also Wellenleitermoden, die sich überwiegend im äußeren Randbereich des Faserkernes ausbreiten, am höchsten. Die physikalische Ursache der Biegungsverluste kann daher als Tunnelvorgang durch eine Potentialbarriere beschrieben werden. Durch die Potentialbarriere an der Grenze zwischen Kernelement der Faser mit hohem Brechungsindex und dem Mantelelement mit niedrigem Brechungsindex entstehen hohe Lichtintensitäten im lichtführenden Kernelement des Lichtwellenleiters oder Sensorelementes.

Wird das Mantelelement 14 durch beispielsweise Herunterschleifen bis an das Kernelement 15 der Faser präpariert, tritt bei Faserbiegung eine Verringung des effektiven Durchmessers der Potentialbarriere auf. Die Tunnelwahrscheinlichkeit wird dadurch erhöht, was bei der Faserbiegung im Vergleich zur unbehandelten Faser eine deutliche Verstärkung der Biegeverluste bedeutet. Im Rahmen der elektromagnetischen Theorie wird dieser Effekt als Verstärkung der Ankopplung der Wellenleitermoden an Strahlungsmoden, welche sich im Außenraum des Kernelementes der Faser ausbreiten, bezeichnet.

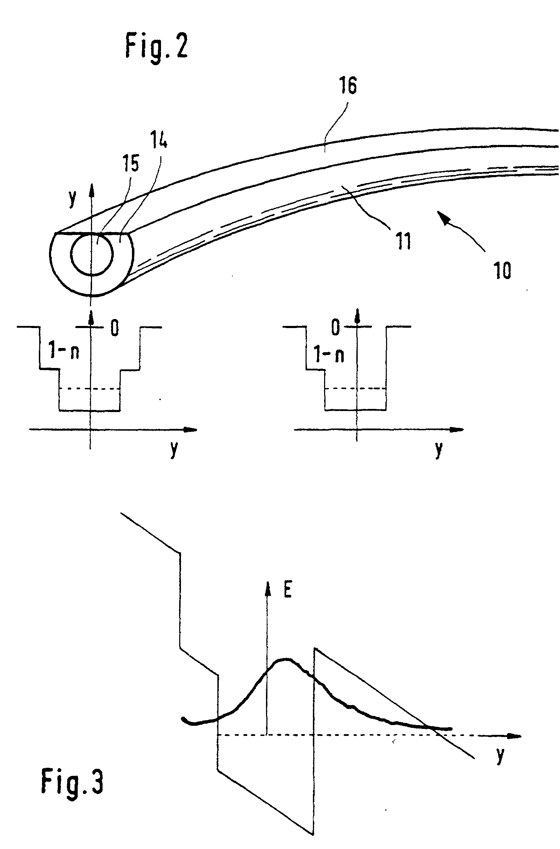

Eine Darstellung dieses Effektes geht aus **Figur 2** hervor. Dabei ist das Sensorelement 10 im Bereich seines Abschnittes 11 (welcher hier lediglich dargestellt ist), bis an das Kernelement 15 im Bereich seines Mantelelementes 14 abgetragen. Im linken Diagramm ist die gleichmäßige Verteilung des Brechungsindexes n aufgetragen als Potentialtopf in der Form (1-n) über dem Querschnitt einer unbehandelten Faser zu sehen. Das rechte Diagramm gibt die Verteilung des Brechungsindexes über dem Querschnitt bei einer entsprechend durch als Abtrag vorbehandelten Faser wieder. Aufgrund des vollständigen Abtrages des Mantelelementes erscheint ab diesem Punkt der Austritt des Lichtes in Luft auch in Form des Brechungsindexes im rechten Diagramm.

**Figur 3** zeigt eine Darstellung der Auftragung der Feldstärkeverteilung über dem Querschnitt der Faser gemäß Figur 2. Das Maximum der Feldstärkeverteilung wird in Richtung der Grenzfläche zwischen Kernelement 15 und Mantelelement 14 der Faser bzw. den Außenraum im Bereich des abgeschliffenen Mantelelementes verschoben. Der Brechungsindex als Potentialtopf erhält nun nach einer mathematischen Transformation des gekrümmten Lichtwellenleiters in einen linearen Lichtwellenleiter einen schrägen Verlauf. Im Bereich der Krümmung der Faser tritt die Feldstärkeverteilung nach außen aus und die Strahlungsmoden im Außenbereich koppeln mit den Wellenleitermoden im inneren Bereich. Dadurch verschiebt sich die maximale Feldstärke nach außen und die Kopplung der elektromagnetischen Moden zwischen außen und innen wird stärker. Wird die Oberfläche des abgetragenen Bereiches der Faser aufgerauht, entsteht eine zusätzliche Verstärkung des Überganges nach außen.

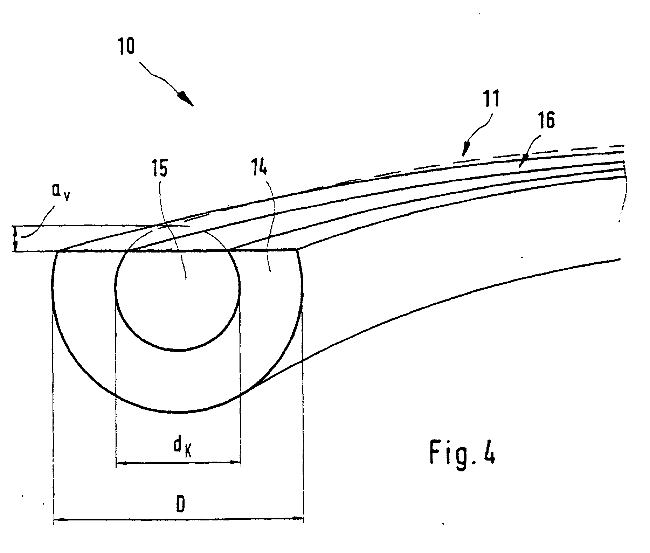

In **Figur 4** ist eine perspektivische Ansicht eines Details eines erfindungsgemäß präparierten Abschnittes 11 des Sensorelementes 10 dargestellt. Bei dieser Ausführungsform ist nicht nur das Mantelelement 14, sondern auch das Kernelement 15 in einem Teilbereich abgetragen. Der Abtrag des Kernelementes wird mit $a_v$ bezeichnet, der Durchmesser des Kernelementes mit $d_K$, der Faserdurchmesser mit D. Das Mantelelement 14 und der Kernbereich 15 sind vorzugsweise aus einem Polymer hergestellt. Die eigentliche Polymerfaser ist zur Isolation von einem scharzen Polyethylenmantel umgeben.

Durch die Wahl eines niedrigeren Brechungsindex des Mantels im Vergleich zum Kernindex tritt Totalreflexion an der Kern-Mantel-Grenzfläche auf, wodurch das Licht wie in einem Topf gefangen, und durch die Faser, nämlich das Kernelement 15, geleitet wird.

Der Faserdurchmesser D kann beispielsweise D=1 Millimeter betragen, bei einem Kerndurchmesser von $d_k$=0,98mm und einem Gesamtdurchmesser einschließlich Isolation von 2,2 mm. Der Abtrag $a_v$ ist vorzugsweise geringer als der Kerndurchmesser $d_K$, maximal beträgt er den halben Kerndurchmesser $d_K$.

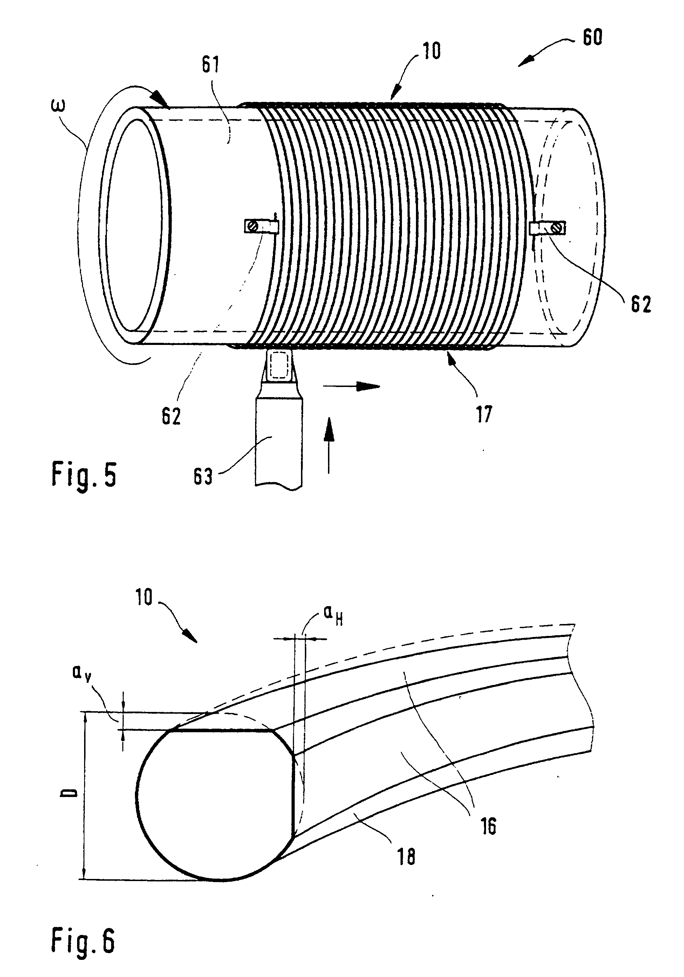

In **Figur 5** ist perspektivisch eine Vorrichtung zum Präparieren der Sensorelemente 10 dargestellt. Bei dieser Vorrichtung wird eine spanende Bearbeitung zur Präparation vorgesehen, nämlich ein Abtragen der Fasern auf einer Drehbank oder einer ähnlichen Vorrichtung.

Hierzu wird zunächst das Sensorelement 10 in Form seiner Faser auf ein Zylinderelement 61 gespult. Zum Fixieren des Anfangs und des Endes der Faser des Sensorelementes sind Klemmenelemente 62 vorgesehen, welche durch Anziehen der Schrauben die Faserenden auf dem Zylinderelement fixieren. Zusätzlich kann ein beispielsweise doppelseitiges Klebeband zwischen Zylinderelement 61 und der Faser des Sensorelementes 10 vorgesehen sein, welches ein Durchrutschen der Faser verhindert. Ein derart präpariertes Zylinderelement 61 kann anschließend beispielsweise auf einer Drehbank eingespannt werden. Das Zylinderelement wird durch die Drehbank zunächst mit der Drehgeschwindigkeit ω rotiert. Die Schnittgeschwindigkeit kann verhältnismäßig niedrig gewählt werden, insbesondere auf ω = 50 Umdrehungen pro Minute, um die Isolierung 17 des Mantelelementes 14 abzudrehen. Unter Erhöhung der Schnittgeschwindigkeit auf Werte von ω = 100 bis 150 Umdrehungen pro Minute und bei geringem Vorschub mit Werten kleiner als 0,1 mm, wird ein Abtrag $a_v$ des Kerndurchmessers $d_K$, wie er aus Figur 4 hervorgeht, vorgenommen. Zu diesem Zweck wird ein Drehmeißel 63 als Schneidwerkzeug gegen die Oberfläche der Faser des Sensorelementes gedrückt. Der Eckenradius des Schneidwerkzeuges (Drehmeißel 63) sollte größer als ein Millimeter sein, sofern der Kerndurchmesser der Faser ebenfalls ein Millimeter beträgt. Die entstehende Oberflächenqualität der Abtagfläche gewährleistet eine gute Sensitivität der präparierten Faser für den Meßzweck. Schleif- oder Polierprozesse sind daher nicht erforderlich.

In **Figur 6** ist eine weitere Ausführungsform des erfindungsgemäßen Sensorelementes dargestellt, bei dem an zwei Seiten, nämlich in horizontaler und in vertikaler Richtung ein Abtrag $a_H$ und $a_v$ vorgesehen ist, um die Sensitivität der Faser des Sensorelementes zu steigern. Das Sensorelement unterscheidet sich weiterhin dadurch, daß für die weitere Steigerung der Empfindlichkeit des Sensorelementes anstelle eines starren Mantelelementes ein weiches Schlauchelement 18, insbesondere ein Silikon- oder lichtundurchlässiger Schrumpfschlauch, vorgesehen ist. Beim Einbetten des Sensorelementes in ein geeignetes Trägermaterial bzw. Leistenelement, beispielsweise ein Gummiprofil oder einen Silikonkautschukstreifen, genügt bereits eine leichte Deformation des Sensorelementes, um Verluste von mehr als 50 % zu erzeugen. Eine solche leichte Deformation kann beispielsweise durch Fingerdruck entsprechend einer Krafteinwirkung von einigen Newton erreicht werden. Die Faser gemäß Figur 6 weist einen Durchmesser D von 0,5 bis 3 mm auf.

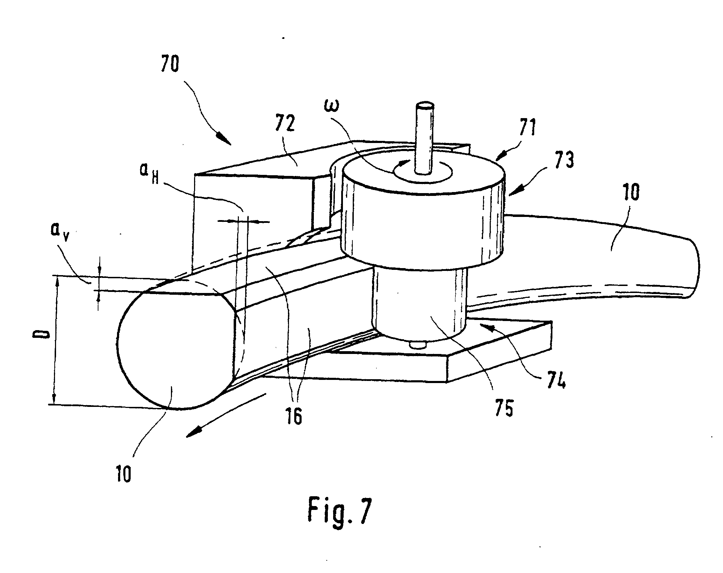

Eine solche Sensorfaser wird beispielsweise mittels einer Vorrichtung 70, wie sie in **Figur 7** in perspektivischer Ansicht dargestellt ist, hergestellt. Die Vorrichtung 70 weist ein Fräserelement 71 auf. Das Fräserelement ist drehbar auf einer Führungseinrichtung 72 montiert. Die Führungseinrichtung nimmt in sich das Sensorelement 10 in Form seiner Faser auf. Dadurch wird die Faser in einer exakt definierten Lage an dem Schaftfräserelement 71 vorbeigeführt. Die Faserbewegung erfolgt dabei vorzugsweise durch Aufwickeln der Faser. Das Fräserelement 71 ist abgesetzt gefertigt, wobei ein oberer Teilbereich 73 einen größeren Durchmesser aufweist als ein unterer Teilbereich 74. Beide Teilbereiche weisen eine äußere fräsfähige Oberfläche 75 auf. Durch Vorsehen des abgesetzten Fräserelementes können zugleich die beiden orthogonal zueinander angeordneten Abtragflächen 16 an der Faser bearbeitet werden, also die beiden Abträge $a_v$ und $a_H$ zugleich vorgenommen werden.

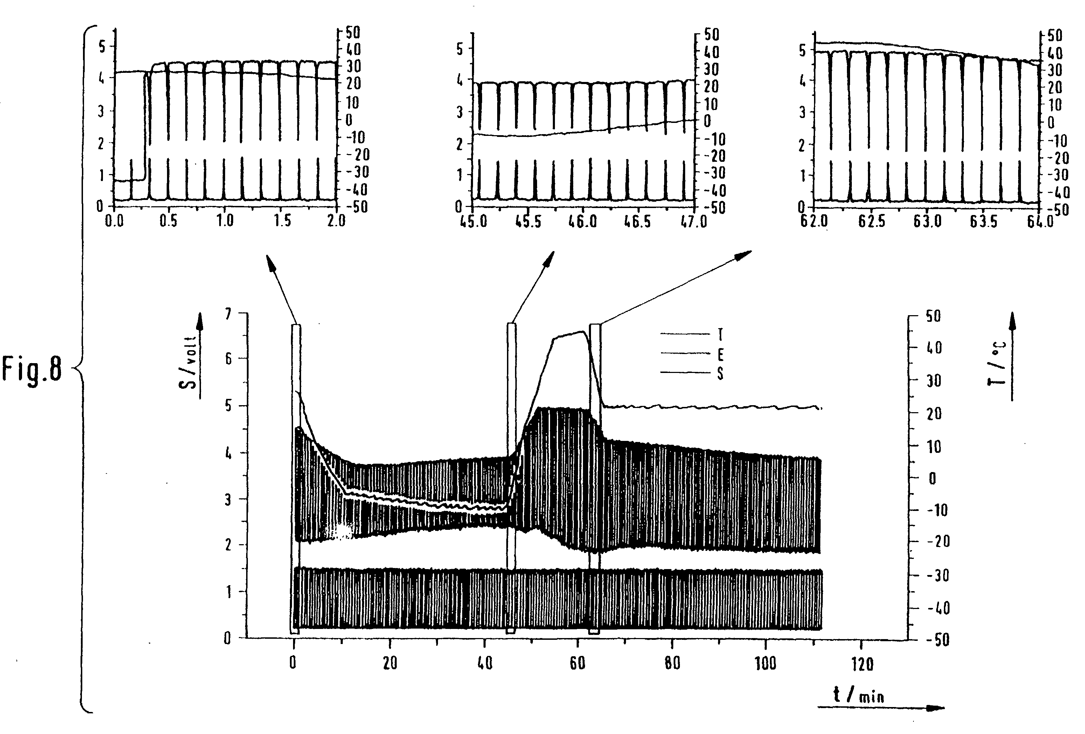

In **Figur 8** sind nun gemessene Signale eines solchen Sensorelementes bei Temperaturänderung zwischen -10 °C und + 50 °C aufgezeichnet. Es findet dabei eine Änderung der Signalamplitute bei periodischer Belastung über 110 Minuten in Abhängigkeit von der Umgebungstemperatur statt. Die im oberen Teil dargestellten separaten Diagramme zeigen Zwei-Sekundenausschnitte der im untere Teil dargestellte zweistündigen Messung. Im unteren Diagramm sind über der Zeit auf der linken Seite die Signalamplitude in Volt und auf der rechten Seite die Temperatur in °C aufgetragen. Die einzelnen im oberen Teil dargestellten Diagramme geben die Situation der kurzen Ausschnitte wieder, welche im unteren Diagramm als längliche Rechtecke markiert sind. Die jeweils dickste Linie gibt die Temperatur, die dünnste Linie das Signal und die mittlere Linie das Anregungssignal wieder. Aus dem Diagramm gemäß Figur 8 geht hervor, daß Temperaturänderungen einen Einfluß auf die Transmission und Signalamplitude bei periodische Druckbelastung über 110 Minuten zeigen. Der Einfluß der Temperatur ist jedoch gering genug, um dennoch eine zuverlässige Schaltschwelle für Druckbelastungen einstellen zu können.

Zu Beginn der Messung wird ein Signalpegel von 4,5 Volt erreicht. Dieser tritt bei etwa 20 °C auf. Der auf das Sensorelement periodisch ausgeübte Druck minimiert die Leistung. Wird die Temperatur heruntergefahren bis auf -10 °C, wird auch die absolute Leistung geringer. Auch der Hell-/Dunkelkontrast wird kleiner bei gleichbleibender Belastung. Aufgrund dieses Effektes kann ein Schwellwert für beispielsweise Auftreten von Hitze durch Feuer hierdurch gewählt und erzeugt werden. Aus Sicherheitsaspekten heraus kann daher die erfindungsgemäße Detektionseinrichtung ebenfalls als Temperatursensor zum Erfassen eines Feueralarmfalles dienen. Beim Stand der Technik wird üblicherweise die Leitfähigkeit von durch radioaktive Elemente ionisierter Luft abgefragt, welche sich bei einem Brandfall ändert.

Bei einem erfindungsgemäßen Sensorelement ist die Zuleitungsfaser vorzugsweise unempfindlich für Temperaturen bzw. Termperaturänderungen. Gleichzeitig mit der Druckempfindlichkeit des erfindungsgemäßen Sensorelementes wird auch die Erzeugung einer Temperaturempfindlichkeit erhöht, weswegen das erfindungsgemäße Element ebenfalls als Temperatursensor dienen kann. Vorzugsweise wird bei der Verwendung der erfindungsgemäßen Detektionseinrichtung für Temperaturänderungen nicht elastisches Material, sondern steifes Material verwendet oder aber verstärktes, elastisches Material. Hierbei ist der auftretende Temperatureffekt jedenfalls zu berücksichtigen.

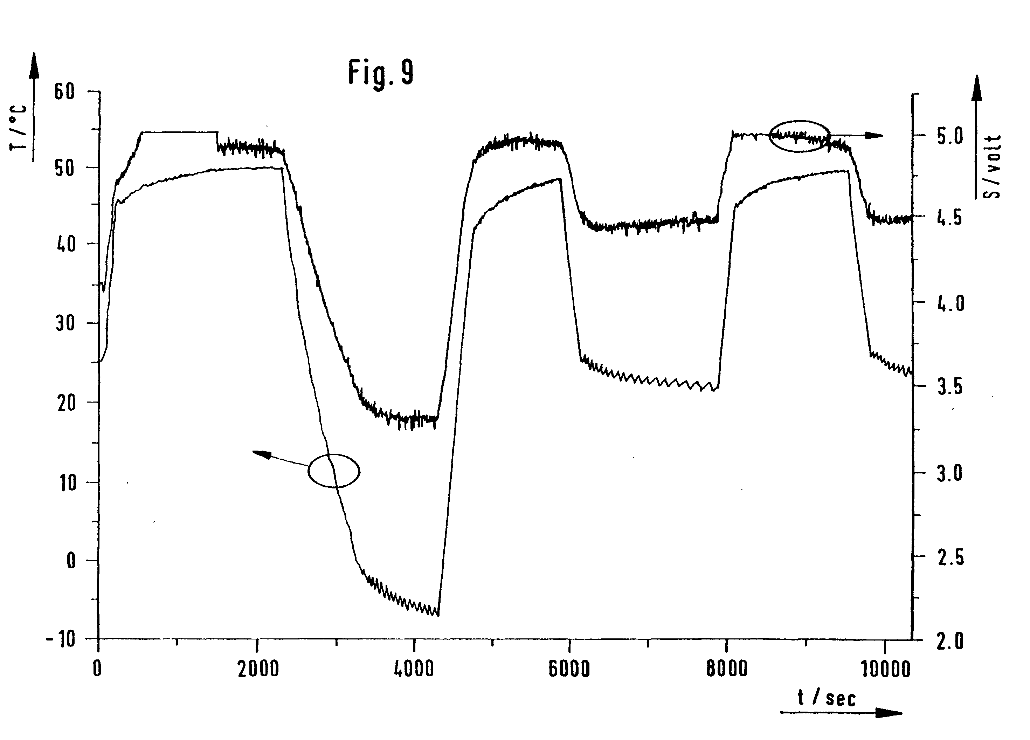

In **Figur 9** stellt die untere Kurve eine Temperatur in °C über der Zeit t in Sekunden und die obere Kurve das mit einem präparierten Sensorelement gemessene Signal in Volt über der Zeit t in Sekunden dar. Die Temperaturänderungen führen dabei jeweils auch zu Signaländerungen. Im wesentlichen folgt die Signalkurve der Kurve der Temperatur, ist also von dieser abhängig.

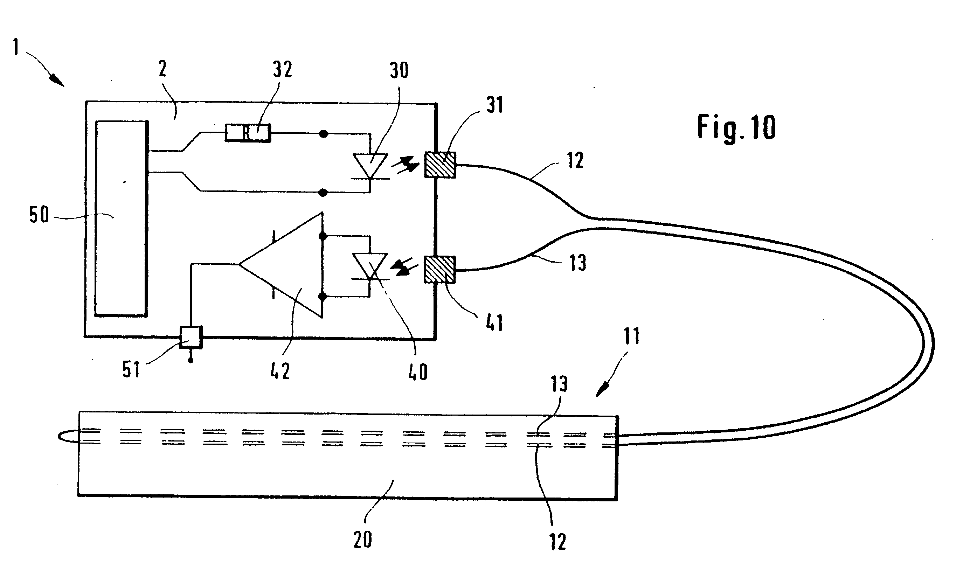

**Figur 10** zeigt eine weitere Ausführungsform einer erfindungsgemäßen Detektionseinrichtung 1. Im Unterschied zu der Ausführungsform gemäß Figur 1 wird nicht nur das Ende der Zuleitungsfaser 12, sondern auch der Anfangsabschnitt der Rückleitungsfaser 13 in das Trägermaterial 20 eingebettet. Es sind daher beide Fasern 12, 13 als Sensorelement als Abschnitte zur Erhöhung der Empfindlichkeit des Sensorelementes präpariert.

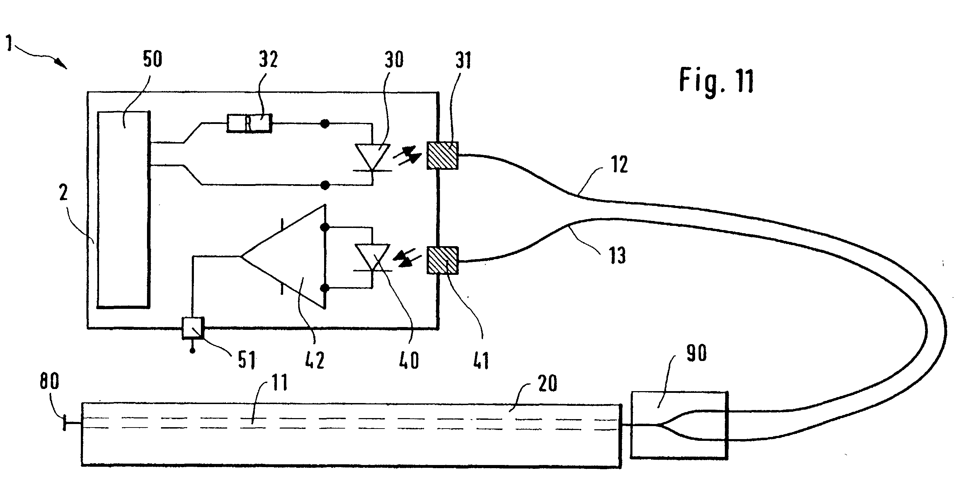

In **Figur 11** ist eine weitere Ausführungsform einer erfindungsgemäßen Detektionseinrichtung dargestellt. Dabei wird die reflektierte Intensität anstelle der transmittierten gemessen. Zu diesem Zweck wird am Ende des in das Trägerelement 20 eingebetteten Abschnittes 11 des Sensorelementes 10 ein Spiegelelement 80 angeordnet. Es führt also lediglich eine Faser in das Trägermaterial hinein. Wie bei der Ausführungsform gemäß Figur 1 bzw. Figur 10 sind eine Zuleitungsfaser 12 und eine Rückleitungsfaser 13 vorgesehen. Diese führen jedoch in einen faseroptischen Richtkoppler 90. Der faseroptische Richtkoppler bildet eine Y- Verzweigung der Zuleitungsfaser und der Rückleitungsfaser. Es führt daher lediglich eine Leitung zu dem Trägerelement 20 hin. Diese kann, anders als in Figur 11 dargestellt, verhältnismäßig lang sein, wobei dann der faseroptische Richtkoppler im Bereich der Schaltungseinheit 2 der Detektionseinrichtung 1 vorgesehen ist.

Das Sensorelement gemäß Figur 11 wird auch als reflexiver Sensor bezeichnet. Das Spiegelelement 80 kann beispielsweise ein verspiegeltes Faserende des Abschnittes 11 sein. Bei diesem passiert das Licht die Meßstrecke wie dargestellt, zweifach. Der faseroptische Richtkoppler 90 verzweigt einen Teil des reflektierten Lichtes zur Empfangsdiode. Der Y-förmige faseroptische Richtkoppler 90 kann auch im Empfangsbereich vorgesehen sein. Durch das Vorsehen einer Verspiegelung am Ende des Abschnittes 11 wird derselbe Effekt erzielt wie bei einer präparierten Rückleitungsfaser. Die eine Hälfte der Signale geht zur Quelle, also der LED 30, die andere Hälfte zum Empfänger also der Photodiode 40. Diese Lösung erweist sich als besonders vorteilhaft, da lediglich eine Faser als Signalleitung verwendet werden muß, wohingegen der Rest der Anordnung, insbesondere zusammen mit dem faseroptischen Richtkoppler, in der Schaltungseinheit 2, insbesondere in Form einer Opto- Elektronik- Box, vorgesehen sein kann. Daher sind besonders wenig Teile zu montieren. Alternativ kann eine Photodiodeneinheit so gestaltet werden, daß die Empfangsdiode bereits in der Sendediode, nämlich der LED 30, integriert ist. Lichtaussendung erfolgt dann im Zeitmultiplex, also lediglich dann, wenn kein Empfang vorgesehen ist.

Das Licht überlagert sich bei dem zweifachen Durchlaufen des empfindlichen Abschnittes 11 aufgrund seiner physikalischen Eigenschaften ungestört. Der faseroptische Richtkoppler kann beispielsweise durch Verschmelzen von zwei einzelnen Fasern über wenige Zentimenter Länge hergestellt werden. Die Verbindung zu den Zu- und Rückleitungsfasern kann entweder durch Stecker erfolgen oder aber fest vorgesehen sein. Um ein Sensorelement bei Anbau an eine Tür und/oder einem Rahmen auf die individuell erforderliche Länge zurechtschneiden zu können, sollte das Spiegelelement 80 nach der Montage des Sensorelementes auf einfache Weise am Faserende des Abschnittes 11 fixierbar sein. Beispielsweise kann das Spiegelelement am Ende eines kleinen zylindrischen Gehäuses angeordnet sein, das auf das vom elastischen Material umgebene Ende des präparierten Abschnittes 11 aufgeschoben und ggf. durch einen geeigneten optischen Kleber an dessen Faserende geklebt wird.

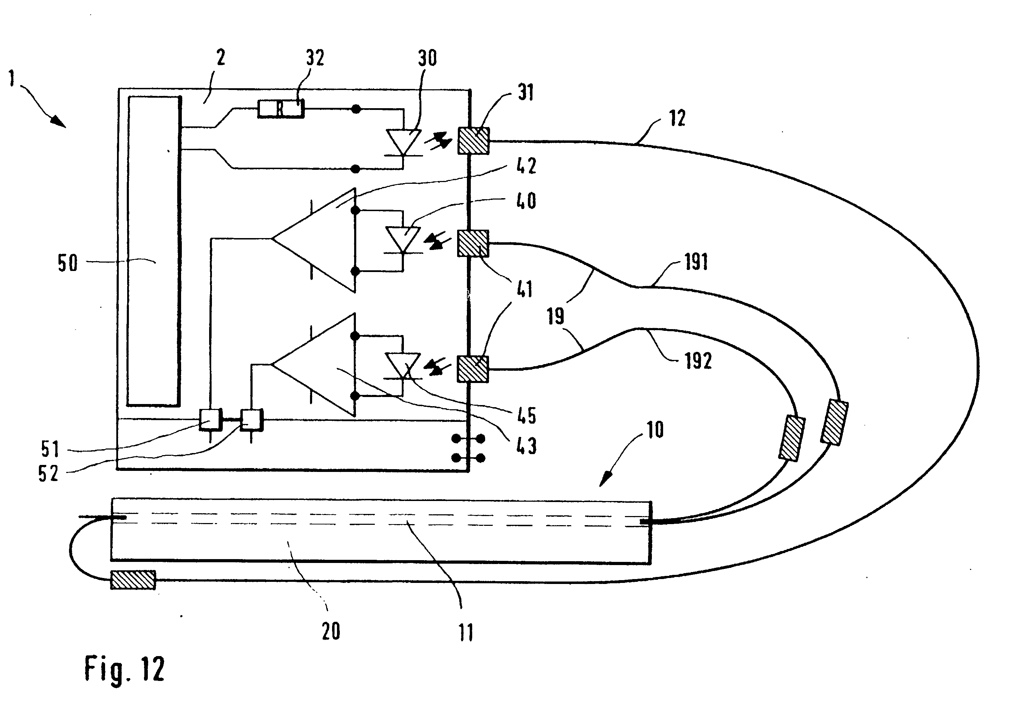

Eine weitere Ausführungsform der erfindungsgemäßen Detektionseinrichtung zeigt **Figur 12**. Die Rückleitungsfaser ist dabei als Doppelfaser 19 gebildet. Es sind daher zwei Photodioden 40, 45 mit zwei Verstärkern 42, 43 sowie zwei Ausgänge 51, 52 gebildet. Bei dieser Ausführungsform werden alle an den in dem Trägerelement 20 eingebetteten Abschnitt 11 angeschlossenen Faserenden mit Steckern versehen, an die die Zu- und Rückleitungsfaser angeschlossen werden.

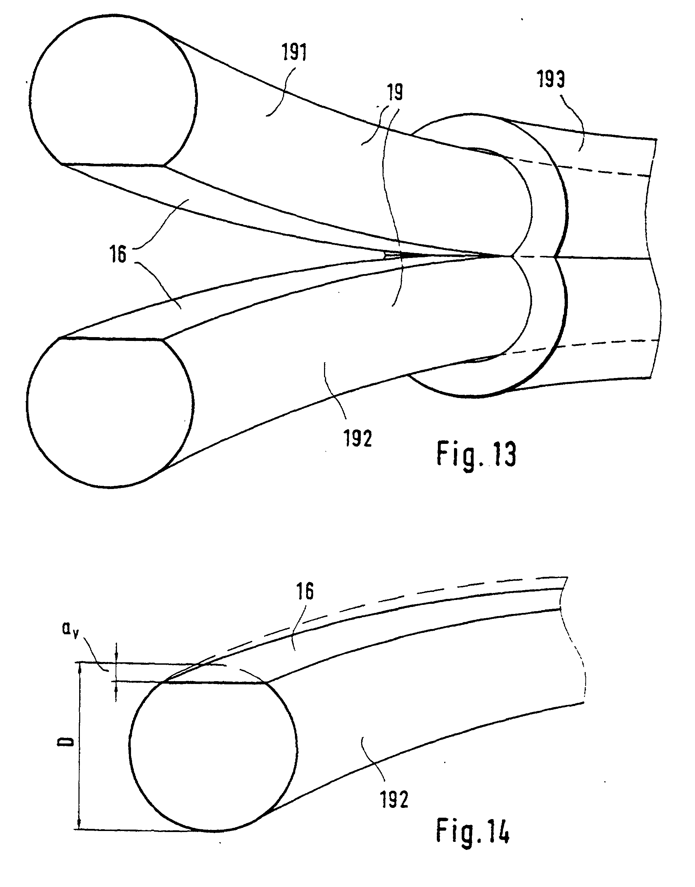

**Figur 13** zeigt eine perspektivische Ansicht einer solchen Doppelfaser 19. Diese weist zwei aneinanderliegende Fasern 191, 192 auf. Die beiden Fasern sind im Bereich ihrer aneinanderliegenden Flächen präpariert. Durch das Doppelkabel kann der Abschnitt des Sensorelementes gerichtet in den vorbereiteten Schlitz eines elastischen Trägermateriales, insbesondere Gummiprofiles 20, in der Vorzugsrichtung eingebracht werden, in der der abgeschliffene Abschnitt beim Biegen maximale Verluste aufweist. Die aneinander anliegenden Oberflächen der beiden Fasern 191, 192 sind vorzugsweise poliert, um eine hohe Überkopplung der Lichtleistung zu gewährleisten. Die beiden Fasern werden jeweils separat voneinander präpariert, wie dies **Figur 14** zeigt, und erst nach dem Präparieren, insbesondere dem Abdrehen gemäß Figur 5, im Bereich ihrer Abtragflächen 16 oder Schnittflächen deckungsgleich in dem Faserkanal 193 aneinander gelegt. Der Faserkanal ist eine Isolierung.

Bei Vorsehen von Doppelfasern findet das Kopplerprinzip Anwendung, bei dem eine Licht-Kopplung zwischen den aneinanderliegenden Fasern innerhalb des Leistenelementes 20 auftritt. Durch arithmetische Verhältnisbildung, z.B. von transmittierter (übergekoppelter) zu Gesamtintensität (transmittiert und reflektiert) in einem die Ausgangssignale in Echtzeit verarbeitenden Mikrocontroller werden biegungsinduzierte Überkopplungen als Maß für den Druck auf den Sensor unabhängig von Verlusten in den Zuleitungen ausgewertet. Bei Vorsehen von Doppelfasern wirkt der Luftspalt zwischen den beiden aneinanderliegenden Fasern über die Faser-Luft-Grenzfläche als Spiegel. Jedoch wird die Spiegelwirkung aufgehoben, sofern bei Biegung des Sensorelementes die präparierten Faserabschnitte gegeneinandergedrückt werden. Vorzugsweise hängen die Doppelfasern an ihren Enden zusammen und werden vorteilhaft in einer Hülle vorgesehen. Durch das Einklemmen in das Leistenelement 20 werden die beiden Fasern ausgerichtet, wodurch bei Andruck ein optischer Kontakt und daraus folgend ein Lichtübertritt auftritt. Der Durchmesser der einzelnen Fasern beträgt vorzugsweise einen Millimeter.

Als Lichtquelle kommen LED's oder beliebige andere Quellen in Frage.

Bei der Wahl des Materials des Leistenelementes 20 sollte der Aspekt der Reproduzierbarkeit der Meßergebnisse Berücksichtigung finden. Fraglich ist nämlich, ob eine Entspannung nach dem Verbiegen auch bei niedrigen Temperaturen auftreten kann, also eine Rückdeformation beispielsweise auch bei -10 °C.

Durch Verwenden der Plastikfaser in Form des Polymerlichtwellenleiters ist auch hier eine gewisse Temperaturempfindlichkeit zu berücksichtigen. Bei niedrigen Temperaturen nehmen beispielsweise die transmittierten Leistungen ab. Hier kann eine intelligente Elektronik zusammen mit einer geeignet gewählten Sensorkonfiguration gegensteuern, beispielsweise durch Bezugsetzung des Meßsignalpegels auf einen Signalwert, der dem ungehinderten Lichtdurchgang entspricht. Zudem können zwei Lichtintensitäten abgefragt werden, nämlich ein oberer Pegel als Referenzwert und ein unterer Bereich als Arbeitsbereich. Drifteffekte können auf diese Art und Weise ermittelt werden. Sowohl der untere Bereich als auch der obere Bereich treten bei Berührung hervor, wobei der Signalkontrast sehr hoch ist. Die erfindungsgemäße Detektionseinrichtung eignet sich, wie bereits erwähnt, neben der Funktion als Drucksensor mit einer Schwellwerterkennung ebenfalls als Temperatursensor.

Die Registrierung des von dem Sensorelement aufgenommenen Signales kann durch Messung der Biegeverluste also an derjenigen Faser erfolgen, in die das Licht eingekoppelt wird, beispielsweise durch Registrierung des reflektierten Signales $P_C$. Eine zweite Auslegemöglichkeit besteht in der Detektion des in die parallele Faser übergekoppelten (transmittierten) Lichtes, wenn die Zuleitungsfaser beim Belasten angedrückt wird. Dies entspricht dem Prinzip des faseroptischen Richtkopplers. Es kann alternativ hierzu auch eine Kombination der beiden Registrierungsmöglichkeiten erfolgen. Die transmittierte oder reflektierte Lichtleistung $P_C = P_R = 0$ zeigt in einem Selbsttest einen eventuell nicht mehr funktionierenden Sensor an. Die Intensitätsmessung kann im Anschluß an eine optoelektronische Wandlung und Vorverstärkung und ggf. arithmetische Verrechnung des Signalpegels mit einem Referenzpegel, mit einer elektronischen Schwellwertschaltung verbunden werden, um im Falle eines Unterschreitens eines vorgegebenen Signalpegels einen Alarm auslösen zu können.

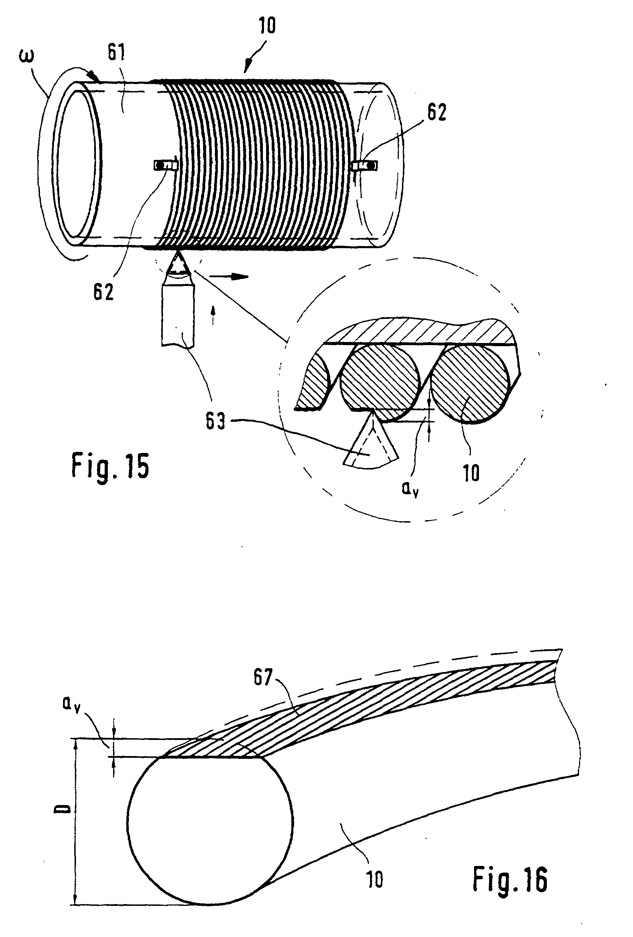

Ein bevorzugtes Verfahren zur Präparierung bzw. zum Abtragen des faseroptischen Sensors ist in den Figuren **15 bis 19** näher erläutert, wobei auch auf die anderen Figuren bezug genommen wird.

Eine periodische Verformung eines Lichtwellenleiters führt zu einer besonders hohen Empfindlichkeit bezüglich der Änderung von Transmissionsverlusten bei äußerer Einwirkung, z. B. durch mechanischen Druck. Dieser sogenannte Mikrobiegungseffekt wird maximiert, es entsteht also ein maximaler Transmissionsverlust, bei einer Periode der Verformung von

$$\Lambda = \frac{C\,\pi r_C n_C}{NA}$$

mit $r_c$ = Radius des Faserkerns, $n_c$ = Brechungsindex des Kerns, C = Brechungsindex - Profilfaktor (C = 2 für Parabelprofil, C = 1,42 für Rechteckprofil) und NA = numerische Apertur der Faser. Mit den typischen Werten für die Polymerfaser ($r_c$ = 0,5 mm, $n_c$ = 1,5, C = 1,42, NA = 0,5) ergibt sich $\Lambda$ = 6,7 mm.

Physikalische Ursache für diesen Effekt ist eine Kopplung zwischen den ausbreitungsfähigen Moden im Lichtwellenleiter (Modenzahl im Fall des Polymer-Lichtwellenleiters $M \approx 4\,V^2 / \pi^2 \approx 1600$). Bei periodischer Verformung der Faser koppeln die ausbreitungsfähigen, geführten Moden im Faserkern untereinander, so daß zusätzlich zu den Moden hoher Ordnung (mit der schwächsten Führung im Faserkern) auch Moden niedriger Ordnung an die Strahlungsmoden und freien Moden im Außenraum koppeln und bei Verformung aus der Faser austreten. Im Potentialbild (($1 - n^2$) als Funktion der Radialkoordinate) entsprechen Moder hoher Ordnung einer niedrigen Phasenausbreitungskonstanten $\beta = n_{eff} / k_0$ ($n_{eff}$ = effektiver Brechungsindex) entsprechend einem hohen Energieniveau im Potentialtopf. Bekanntlich sind die Energieniveaus eines harmonischen Oszillators im Parabelpotential äquidistant, so daß eine periodische Störung in diesem Fall die maximale Kopplung bewirkt (C = 2). Die gleichzeitig damit einhergehende Modenmischung bewirkt, daß auch nach der Auskopplung der ursprünglichen Moden mit niedrigem β hinter dem ersten Belastungsbereich wieder Moden zur Verfügung stehen, die bei Belastungen auf anschließenden Faserabschnitten weitere Transmissionsverluste bewirken.

Modenkopplung kann allgemein durch periodische Störung in einem Multimode-Lichtwellenleiter hervorgerufen werden. In dem in der Figur 15 dargestellten bevorzugtem Fall wird dies durch spezielle Maßnahmen beim Abtragen der Oberfläche des Polymer-Lichtwellenleiters erreicht, wobei im Unterschied zur bekannten reversiblen Mikrobiegung eine permanente periodische Strukturierung einer oder mehrerer Seiten der Faseroberfläche erzeugt wird. Figur 15 zeigt als Beispiel einer Vorrichtung zur Bearbeitung der Faseroberfläche die wesentlichen Teile einer Drehbank mit der auf einen Zylinder gewickelten und fixierten Polymerfaser sowie als Schneidwerkzeug einen Drehmeißel. Es wird hier ein Schneidwerkzeug eingesetzt, das eine an die gewünschte Oberflächenstruktur angepaßte Mikrostruktur aufweist. Geeignet ist sowohl eine Werkzeug mit einer einzelnen Spitze als auch eines mit einer strukturierten Schneidkante. Eine einzelne Spitze erzeugt bei einer spiralig aufgewickelten Faser mit der kleinstmöglichen Steigung $D/2r_z$ entsprechend $\alpha = \arctan(D/2r_z) = 1/80 \approx 0,7°$ (D = Faserdurchmesser, $r_z$ = Zylinderradius) eine periodische Oberflächenstruktur mit der Periode:

$$\Lambda = \nu_z$$

senkrecht zur Fäserachse, wobei $\nu_z$ = Vorschub des Schneidwerkzeugs pro Umdrehung. In Ausbreitungsrichtung des Lichts ergibt sich eine Periode von

$$\Lambda_{zf} = \frac{\Lambda}{\sin \alpha} \approx \Lambda \frac{2r_z}{D}$$

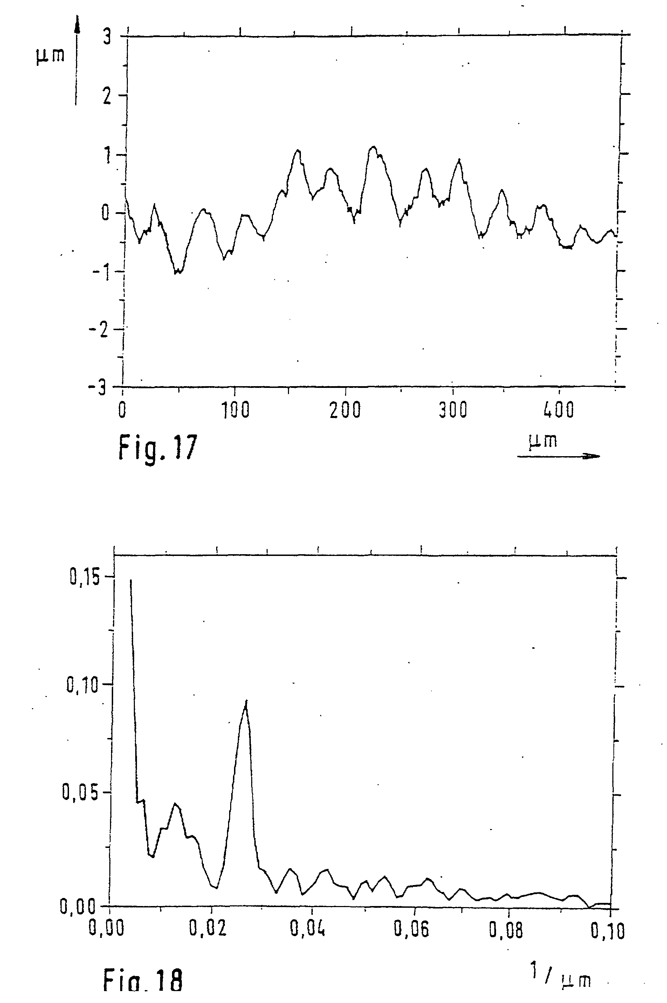

**Figur 16** zeigt anders als die im übrigen ähnlichen Figuren 4 und 6 schematisch einen Abschnitt einer bearbeiteten Faser mit **strukturierter** Oberfläche. Die periodische Rillenstruktur ist an den im Winkel zur Faserlängsachse auf der Oberfläche verlaufenden Linien zu erkennen. Sie verläuft real nicht so schräg wie in der Figur 16 mit einer Tiefe von einigen μm in einem durch das Bearbeitungsverfahren gegebenen sehr kleinen Winkel zur Faserlängsachse (ca. 1°, s.o.). Der gesamte Abtrag in diesem Beispiel reicht bis in den Faserkern.

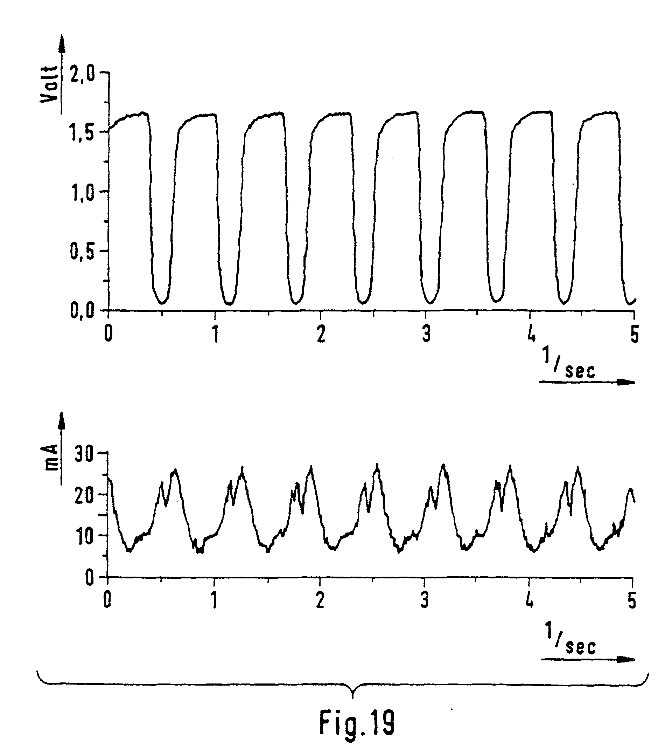

**Figur 17** zeigt das Oberflächenprofil eines bearbeiteten Abschnitts des Polymer-Lichtwellenleiters, der unter einem Vorschub $\nu_z$ = 40 μm/Umdrehung auf einem Zylinder mit $r_z$ = 80 mm abgedreht wurde. In dem Ortsfrequenzspektrum in **Figur 18** ist der entsprechende Peak bei 1/$\Lambda$ = 0,025 1/μm entsprechend $\Lambda_{zf}$ = 3,3 mm deutlich zu erkennen. Dieser Wert stimmt größenordnungsmäßig mit dem aus Gleichung (1) gewonnenen theoretischen Wert für die Mikrobiegung überein.

Die zeitabhängige Transmissionsänderung einer nach dem beschriebenen Verfahren bearbeiteten Faser als sensitives Element eines Druck-/Kraftsensors bei periodischer Belastung durch eine motorbetriebene Druckeinrichtung ist in **Figur 19** gezeigt. Die Faser ist hierbei auf einer dünnen elastischen Unterlage fixiert, um bei Belastung eine makroskopische Durchbiegung zu gewährleisten. Die Durchbiegung betrug in diesem Fall ca. 1,5 mm. Eine weitere Steigerung der Sensorempfindlichkeit ist möglich durch Optimierung des Ortsfrequenzspektrums der Mikrostruktur, wie es in **Figur 18** gezeigt ist. Die obere Kurve in Figur 19 läßt die fast vollständige Durchmodulation der transmittierten Lichtleistung bei Faserbiegung erkennen. Sie ist um mehr als ein Faktor 10 höher ist als bei der unbehandelten Faser. Gut zu erkennen ist auch das hohe Signal - Rausch - Verhältnis.

Die mit dem beschriebenen Verfahren erzielte Verstärkung der Makro-Biegungsverluste kann im Prinzip noch weiter erhöht werden, wenn die Mikrostrukturierung auf mehreren Faserseiten erfolgt, wie in Figur 6 und 7 gezeigt, oder wenn sie vollständig um den Faserumfang herumläuft. Hierfür muß die Polymerfaser durch ein die Faser umgebendes Schneidwerkzeug gezogen werden, wie es beispielhaft in Figur 7 gezeigt ist. Auch ein die Faser ringförmig umgebendes Schneidwerkzeug ist denkbar. Eine derartige Prozedur ermöglicht auch eine Endlosfertigung, wobei die Faser direkt anschließend an den Ziehprozeß und vor der Umhüllung mit der lichtabsorbierenden Faseriosolation durch das Bearbeitungswerkzeug läuft.

Die beschriebene Methode der Faserpräparation durch Oberflächenabtrag und Mikrostrukturierung bewirkt zunächst eine signifikante Erhöhung der Grunddämpfung (typisch von 0,3 dB/m auf 8 dB/m nach der Bearbeitung). Bei der Optimierung der Mikrostruktur ist entscheidend, eine starke Dämpfungsänderung mit der Makrobiegung bei gleichzeitig möglichst niedriger Grunddämpfung zu erzielen. Die wichtigsten Optimierungsparameter sind: abgetragener Oberflächenbereich, mittlere Tiefe des Gesamtabtrags, Amplitude und Ortsfrequenzspektrum der Mikrostruktur.

**Bezugszeichenliste**

1    Detektionseinrichtung
2    Schaltungseinheit

10    Sensorelement

| 11 | Abschnitt |
| 12 | Zuleitungsfaser |
| 13 | Rückleitungsfaser |
| 14 | Mantelelement |
| 15 | Kernelement |
| 16 | Abtragfläche |
| 17 | Isolierung |
| 18 | Schlauchelement |
| 19 | Doppelfaser |
| 20 | Trägerelement/Leistenelement |
| 21 | Anschlußelement |
| 22 | Anschlußelement |
| | |
| 30 | LED |
| 31 | Empfangs- und Anschlußelement |
| 32 | Widerstand |
| | |
| 40 | Photodiode |
| 41 | Sende- und Anschlußelement |
| 42 | Vorverstärker |
| 43 | Verstärker |
| 45 | Photodiode |
| | |
| 50 | Stromversorgung |
| 51 | Ausgang |
| 52 | Ausgang |
| | |
| 60 | Vorrichtung |
| 61 | Zylinderelement |
| 62 | Klemmenelement |
| 63 | Drehmeißel |
| 67 | Rillen |
| | |
| 70 | Vorrichtung |
| 71 | Fräserelement |
| 72 | Führungseinrichtung |
| 73 | obere Teilbereich |
| 74 | unterer Teilbereich |
| 75 | Oberfläche |
| | |
| 80 | Spiegelelement |
| | |
| 90 | faseroptischer Richtkoppler |
| | |
| 191 | Faser |
| 192 | Faser |
| 193 | Faserkanal |

$a_V$ Abtrag (vertikal)

$a_H$ Abtrag (horizontal)

$d_K$ Kerndurchmesser

D Faserdurchmesser

**Patentansprüche**

**1.** Faseroptischer Sensor für Druck- und Krafteinflüsse mit einer lichtwellenleitenden Multimode-Faser, wobei die Faser einen im Wesentlichen kreisförmigen Querschnitt besitzt, der durch Präparation oder Abtragen modifiziert ist, und wobei die Oberfläche des abgetrennten Bereiches der Faser aufgeraut oder mit einer Struktur versehen ist.

**2.** Faseroptischer Sensor nach Anspruch 1,
**dadurch gekennzeichnet,**
**dass** die lichtwellenleitende Faser aus Kunststoff besteht.

**3.** Faseroptischer Sensor nach Anspruch 2,
**dadurch gekennzeichnet,**
**dass** die Faser aus Polymethylmethacrylat (PMMA) besteht.

**4.** Faseroptischer Sensor nach einem der vorstehenden Ansprüche,
**dadurch gekennzeichnet,**
**dass** die Faser im Querschnitt D-förmig ist, also einen kreisförmigen Querschnitt mit einer geraden Sekante aufweist.

**5.** Faseroptischer Sensor nach Anspruch 4,
**dadurch gekennzeichnet,**
**dass** der Abtrag $a_V$ kleiner ist, als der halbe Kerndurchmesser der Faser.

**6.** Faseroptischer Sensor nach Anspruch 4 oder 5,
**dadurch gekennzeichnet,**
**dass** der entstehende im wesentlichen flache Streifen an der Oberfläche der Faser im abgetragenen Bereich mit Rillen versehen ist, die von der Parallelen zur Faserlängsrichtung abweichen.

**7.** Faseroptischer Sensor nach Anspruch 6,
**dadurch gekennzeichnet,**
**dass** diese Abweichung kleiner als 3° ist.

**8.** Detektionseinrichtung zur Schließkantenüberwachung und/oder zum Überwachen des Schließvorganges von Türen und Industrietoren, bei der die Detektionseinrichtung (1) als Drucksensorelement (10) einen faseroptischen Sensor nach einem der Ansprüche 1 bis 7 aufweist, wobei das Sensorelement in eine Türkante integriert und/oder in ein die Tür umgebendes Trägerelement (20) einfügbar oder eingefügt ist.

**9.** Detektionseinrichtung nach Anspruch 8,
**dadurch gekennzeichnet,**
**dass** eine elektronische Schwellwertschaltung (2) vorgesehen ist.

**10.** Detektionseinrichtung nach einem der vorstehenden Ansprüche,
**dadurch gekennzeichnet,**

**dass** das Sensorelement ein Polymerlichtwellenleiter in Faserform ist mit einem lichtführenden Faserkernelement (15) und einem das Kernelement umgebenden Mantelelement (14).

11. Detektionseinrichtung nach Anspruch 10,
    **dadurch gekennzeichnet,**
    **dass** die Faser transparent ist und eine lichtabsorbierende Isolierschicht (17) aufweist.

12. Detektionseinrichtung nach einem der Ansprüche 8 bis 11,
    **dadurch gekennzeichnet,**
    **dass** eine Präparation an dem Mantelelement (14) vorgesehen ist, wobei insbesondere ein Teilbereich des Mantelelementes abgetragen ist.

13. Detektionseinrichtung nach einem der Ansprüche 8 bis 12,
    **dadurch gekennzeichnet,**
    **dass** die Detektionseinrichtung zwei aneinanderliegende Sensorelemente als Doppelfaser (19) aufweist zum gerichteten Einbringen des Sensorabschnittes in das Trägerelement in einer maximale Biegeverluste verursachenden Vorzugsrichtung.

14. Detektionseinrichtung nach einem der Ansprüche 8 bis 13,
    **dadurch gekennzeichnet,**
    **dass** das Sensorelement an einem faseroptischen oder integriert optischen Richtkoppler (90) angeschlossen ist und ein verspiegeltes Faserende (80) aufweist.

15. Detektionseinrichtung nach Anspruch 13 oder 14,
    **dadurch gekennzeichnet,**
    **dass** bei Verwenden von Doppelfaser- Sensorelementen beide Fasern (191, 192) nach dem Abtrag getrennt und ihre Schnittflächen deckungsgleich in dem Faserkanal eingelegt sind.

16. Detektionseinrichtung nach einem der Ansprüche 8 bis 15,
    **dadurch gekennzeichnet,**
    **dass** die Isolierung (17) aus einem starren Material oder aus einem weichen lichtundurchlässigen Material, insbesondere Silikon oder Schrumpfschlauch besteht.

17. Detektionseinrichtung nach einem der Ansprüche 8 bis 16,
    **dadurch gekennzeichnet,**
    **dass** ein transmissives Sensorelement vorgesehen ist, wobei Leuchtdioden (30), Steckverbindungen mit Polymerfasereinkopplungen in Verbindung mit dem detektierenden, in dem Trägerelement eingebetteten, präparierten Sensorfaserabschnitt (11) und einer Rückleitungsfaser (13) am anderen Ende des Sensorelementes vorgesehen sind.

18. Detektionseinrichtung nach Anspruch 17,
    **dadurch gekennzeichnet,**
    **dass** die Rückleitungsfaser in das Trägerelement eingebettet und präpariert ist.

19. Detektionseinrichtung nach einem der Ansprüche 17 oder 18,
    **dadurch gekennzeichnet,**
    **dass** eine Doppelfaser (19) vorgesehen ist, wobei an nebeneinander- oder gegenüberliegenden Seiten der nebeneinanderliegenden Fasern (191, 192) ein Teilbereich des Fasermantels abgetragen ist.

20. Detektionseinrichtung nach einem der Ansprüche 8 bis 16,
    **dadurch gekennzeichnet,**
    **dass** das Sensorelement reflexiv ist, wobei das Licht den endseitig verspiegelten Abschnitt (11) zweimal durchläuft.

21. Verfahren zum Herstellen eines faseroptischen Sensors nach einem der Ansprüche 1 bis 7 oder einer Detektionseinrichtung nach einem der Ansprüche 8 bis 20,
    **dadurch gekennzeichnet,**
    **dass** die Multimode-Faser oder die Multimode-Fasern eines Sensorelementes (10) so abgetragen bzw. präpariert werden, dass die Oberfläche des abgetragenen Bereiches der Faser aufgeraut oder mit einer Struktur versehen wird.

22. Verfahren nach Anspruch 21,
    **dadurch gekennzeichnet,**
    **dass** die Faser auf ein zylinderförmiges Element (61) gespult und auf diesem durch Mittel (62) fixiert wird, dass das präparierte zylinderförmige Element in einer Drehvorrichtung eingespannt und die Isolierschicht der Fasern bis zum Mantelelement abgedreht wird.

23. Verfahren nach Anspruch 22,
    **dadurch gekennzeichnet,**
    **dass** die Schnittgeschwindigkeit fünfzig bis achtzig Umdrehungen pro Minute beträgt.

24. Verfahren nach Anspruch 22 oder 23,
    **dadurch gekennzeichnet,**
    **dass** bei einer im Verhältnis zum Schritt des Abdrehens der Isolierschicht erhöhter Schnittgeschwindigkeit und mit einer Vorschubgeschwindigkeit der Kerndurchmesser $d_K$ um einen Abtrag $a_V$ verringert wird.

25. Verfahren nach Anspruch 24,
    **dadurch gekennzeichnet,**
    **dass** die Schnittgeschwindigkeit 100 bis 150 Meter pro Minute und der Vorschub weniger als 0,1 mm beträgt.

26. Verfahren nach einem der Ansprüche 21 bis 25, **dadurch gekennzeichnet,** **dass** bei einem Doppelfaser- Sensorelement die Oberfläche der Abtragfläche der Fasern poliert wird.

27. Verfahren nach Anspruch 21, **dadurch gekennzeichnet,** **dass** die Faser oder eine Führungseinrichtung (72) durch Führungsmittel in exakt definierter Lage an einem Fräsereiement (71) einer Fräsmaschine vorbeigeführt wird, wobei die Faserbewegung durch Aufwickeln der Faser oder einen alternativen motorischen oder mechanischen Antrieb erfolgt.

28. Verfahren nach Anspruch 27, **dadurch gekennzeichnet,** **dass** bei abgesetzten Fräsern (73, 74) zugleich zwei orthogonal zueinander angeordnete Ebenen der Faser bearbeitet werden, wobei durch die Positionierung der Führungsmittel der Arbeitseingriff $a_H$ und $a_V$ in horizontaler und vertikaler Richtung einstellbar ist.

29. Verfahren nach einem der Ansprüche 21 bis 29, **dadurch gekennzeichnet,** **dass** durch Einsatz eines Schneidewerkzeugs mit einzelner Spitze oder strukturierter Schneidkante eine Mikrokonturierung der Oberflächenstruktur der Faser erfolgt.

30. Verfahren zur Schließkantenüberwachung und/ oder zum Überwachen des Schließvorgangs von Türen mittels einer Detektionseinrichtung nach einem der Ansprüche 8 bis 20 oder hergestellt nach einem Verfahren nach einem der Ansprüche 21 bis 29, **dadurch gekennzeichnet,** **dass** ein Sensorelement (10) in ein Trägerelement (20) oder ein elastisches Leistenelement der Tür eingefügt wird, dass durch Druckausübung auf das Leistenelement ein Signal des Sensorelementes erzeugbar ist, dass die Signalintensität erfasst und ein Schwellwert abgefragt wird, und dass bei Über- oder Unterschreiten des Schwellwertes der Schließvorgang unterbrochen oder rückgängig gemacht wird.

31. Verfahren nach Anspruch 30, **dadurch gekennzeichnet,** **dass** die Leistung des Sensorelementes abgefragt wird und deren Abfall den Schließvorgang der Tür direkt oder indirekt beeinflusst.

32. Verfahren nach Anspruch 30 oder 31,

**dadurch gekennzeichnet,** **dass** die Biegungsverluste an denjenigen Fasern des Sensorelementes gemessen werden, in die Licht eingekoppelt wird.

33. Verfahren nach Anspruch 32, **dadurch gekennzeichnet,** **dass** das transmittierte Sensorsignal $P_T$ registriert wird.

34. Verfahren nach einem der Ansprüche 30 bis 33, **dadurch gekennzeichnet,** **dass** in eine parallele Faser des Sensorelementes beim Andrücken einer Zuleitungsfaser beim Belasten übergekoppeltes Licht nach dem Prinzip eines Faseroptischen Richtkopplers detektiert wird.

35. Verfahren nach einem der Ansprüche 30 bis 34, **dadurch gekennzeichnet,** **dass** ein Dauerlichtpegel oder die transmittierte oder reflektierte Lichtleistung $P_T$ oder $P_R$ für einen Selbsttest des Sensorelementes detektiert werden.

36. Verfahren nach einem der Ansprüche 30 bis 35, **dadurch gekennzeichnet,** **dass** das empfangene Signal optoelektronisch gewandelt, verstärkt, auf Intensität überprüft und mit einem vorgegebenen Schwellwert verglichen wird.

37. Schalteinrichtung unter Verwendung eines faseroptischen Sensors nach einem der Ansprüche 1 bis 7.

**Claims**

1. Fibre-optic sensor for pressure- and force influences comprising an optical wave-guiding multi-mode fibre, wherein the fibre has a substantially circular cross section, which is modified by preparation or eroding, and wherein the surface of the eroded region of the fibre is roughened or provided with a texture.

2. Fibre-optic sensor according to claim 1, **characterized in** **that** the optical wave-guiding fibre is made of plastics material.

3. Fibre-optic sensor according to claim 2, **characterized in** **that** the fibre is made of polymethyl methacrylate (PMMA).

4. Fibre-optic sensor according to one of the preceding claims, **characterized in** **that** the fibre is D-shaped in cross section, i.e. has a circular cross section with a straight secant.

**5.** Fibre-optic sensor according to claim 4, **characterized in** **that** the removed amount $a_v$ is less than half of the core diameter of the fibre.

**6.** Fibre-optic sensor according to claim 4 or 5, **characterized in** **that** the substantially flat strip arising at the surface of the fibre in the eroded region is provided with grooves, which deviate from the line parallel to the fibre longitudinal axis.

**7.** Fibre-optic sensor according to claim 6, **characterized in** **that** said deviation is smaller than 3°.

**8.** Detection device for monitoring closing edges and/or for monitoring the closing operation of doors and industrial gates, in which the detection device (1) comprises as pressure sensor element (10) a fibre-optic sensor according to one of claims 1 to 7, wherein the sensor element is integrated in a door edge and/or is insertable or inserted into a carrier element (20) surrounding the door.

**9.** Detection device according to claim 8, **characterized in** **that** an electronic threshold circuit (2) is provided.

**10.** Detection device according to one of the preceding claims, **characterized in** **that** the sensor element is a polymer optical waveguide in fibre form, comprising a light-guiding fibre core element (15) and a cladding element (14) surrounding the core element.

**11.** Detection device according to claim 10, **characterized in** **that** the fibre is transparent and has a light-absorbing insulating layer (17).

**12.** Detection device according to one of claims 8 to 11, **characterized in** **that** a preparation of the cladding element (14) is provided, wherein in particular a sub-region of the cladding element is eroded.

**13.** Detection device according to one of claims 8 to 12, **characterized in** **that** the detection device comprises two juxtaposed sensor elements in the form of double fibre (19) for oriented introducing of the sensor portion into the carrier element in a preferential direction causing maximum bend losses.

**14.** Detection device according to one of claims 8 to 13, **characterized in**

**that** the sensor element is connected to a fibre-optic or integrated optical directional coupler (90) and has a reflective fibre end (80).

**15.** Detection device according to claim 13 or 14, **characterized in** **that,** given the use of double fibre sensor elements, both fibres (191, 192) are separated after erosion and their cut faces are installed congruently in the fibre channel.

**16.** Detection device according to one of claims 8 to 15, **characterized in** **that** the insulation (17) consists of a rigid material or a non-rigid opaque material, in particular silicone or shrinkable tubing.

**17.** Detection device according to one of claims 8 to 16, **characterized in** **that** a transmissive sensor element is provided, wherein light-emitting diodes (30), plug-in connections with polymer fibre couplings in conjunction with the detecting prepared sensor fibre portion (11), which is embedded in the carrier element, and a return fibre (13) are provided at the other end of the sensor element.

**18.** Detection device according to claim 17, **characterized in** **that** the return fibre is embedded in the carrier element and prepared.

**19.** Detection device according to one of claims 17 or 18, **characterized in** **that** a double fibre (19) is provided, wherein at adjacent or opposite sides of the mutually adjacent fibres (191, 192) a sub-region of the fibre cladding is eroded.

**20.** Detection device according to one of claims 8 to 16, **characterized in** **that** the sensor element is reflective, wherein the light passes twice through the portion (11) with the reflective end.

**21.** Method of manufacturing a fibre-optic sensor according to one of claims 1 to 7 or a detection device according to one of claims 8 to 20, **characterized in** **that** the multi-mode fibre or the multi-mode fibres of a sensor element (10) are eroded and/or prepared in such a way that the surface of the eroded region of the fibre is roughened or provided with a texture.

**22.** Method according to claim 21, **characterized in**

**that** the fibre is wound onto a cylindrical element (61) and fixed on the latter by means (62), that the prepared cylindrical element is clamped in a turning apparatus and the insulating layer of the fibres is turned off as far as the cladding element.

23. Method according to claim 22,
    **characterized in**
    **that** the cutting speed is fifty to eighty revolutions per minute.

24. Method according to claim 22 or 23,
    **characterized in**
    **that** at a cutting speed, which is higher than the pace of turning off the insulating layer, and at a feed rate the core diameter $d_k$ is reduced by a removed amount $a_v$.

25. Method according to claim 24,
    **characterized in**
    **that** the cutting speed is 100 to 150 metres per minute and the feed is less than 0.1 mm.

26. Method according to one of claims 21 to 25,
    **characterized in**
    **that,** given a double fibre sensor element, the surface of the eroded area of the fibres is polished.

27. Method according to claim 21,
    **characterized in**
    **that** the fibre or a guide device (72) is guided by guide means in an exactly defined position past a milling element (71) of a milling machine, wherein the fibre movement is effected by take-up of the fibre or by an alternative motorized or mechanical drive.

28. Method according to claim 27,
    **characterized in**
    **that,** given offset cutters (73, 74), two planes of the fibre disposed orthogonally relative to one another are simultaneously machined, wherein by virtue of the positioning of the guide means the working engagement $a_H$ and $a_V$ is adjustable in horizontal and vertical direction.

29. Method according to one of claims 21 to 29,
    **characterized in**
    **that** micro-contouring of the superficial structure of the fibre is effected by virtue of the use of a cutting tool with an individual tip or a structured cutting edge.

30. Method of monitoring closing edges and/or of monitoring the closing operation of doors by means of a detection device according to one of claims 8 to 20 or manufactured by a method according to one of claims 21 to 29,
    **characterized in**
    **that** a sensor element (10) is inserted into a carrier element (20) or an elastic strip element of the door, that by virtue of pressure exerted upon the strip element a signal of the sensor element is producible, that the signal intensity is detected and a threshold value interrogated, and that in the event of over- or undershooting of the threshold value the closing operation is interrupted or reversed.

31. Method according to claim 30,
    **characterized in**
    **that** the power of the sensor element is interrogated and a drop of said power directly or indirectly influences the closing operation of the door.

32. Method according to claim 30 or 31,
    **characterized in**
    **that** the bend losses of the fibres of the sensor element, into which light is launched, are measured.

33. Method according to claim 32,
    **characterized in**
    **that** the transmitted sensor signal $P_T$ is recorded.

34. Method according to one of claims 30 to 33,
    **characterized in**
    **that** light, which is overcoupled into a parallel fibre of the sensor element with contact with an incoming fibre during loading, is detected in accordance with the principle of a fibre-optic directional coupler.

35. Method according to one of claims 30 to 34,
    **characterized in**
    **that** a maintained light level or the transmitted or reflected light output $P_T$ or $P_R$ are detected for a self test of the sensor element.

36. Method according to one of claims 30 to 35,
    **characterized in**
    **that** the received signal is optoelectronically converted, amplified, checked for intensity and compared with a defined threshold value.

37. Switching device using a fibre-optic sensor according to one of claims 1 to 7.

**Revendications**

1. Détecteur à fibre optique pour influences de pression et de force avec une fibre multimode guide d'ondes optiques, la fibre présentant une section sensiblement circulaire, qui est modifiée par préparation ou décapage, la surface de la zone décapée de la fibre étant rugueuse ou pourvue d'une structure.

**2.** Détecteur à fibre optique selon la revendication 1, **caractérisé en ce que** la fibre guide d'onde optique est en plastique.

**3.** Détecteur à fibre optique selon la revendication 2, **caractérisé en ce que** la fibre est en en polyméthacrylate de méthyle(PMMA).

**4.** Détecteur à fibre optique selon l'une quelconque des revendications précédentes, **caractérisé en ce que** la fibre a une forme de D en section, présente donc une section circulaire avec une sécante droite.

**5.** Détecteur à fibre optique selon la revendication 4, **caractérisé en ce que** le décapage $a_v$ est inférieur au demi-diamètre du noyau de la fibre.

**6.** Détecteur à fibre optique selon la revendication 4 ou 5, **caractérisé en ce que** la bande sensiblement plate en formation est pourvue, à la surface de la fibre dans la zone décapée, de rainures qui s'écartent de la parallèle par rapport au sens longitudinal de la fibre.

**7.** Détecteur à fibre optique selon la revendication 6, **caractérisé en ce que** cet écart est inférieur à 3°.

**8.** Système de détection pour le contrôle des arêtes de fermeture et/ou pour le contrôle de l'opération de fermeture de portes et portails industriels, sur lequel le système de détection (1) présente comme détecteur de pression (10) un détecteur à fibre optique selon l'une quelconque des revendications 1 à 7, le détecteur étant intégré dans une arête de bord et/ou pouvant être inséré ou étant inséré dans un élément support (20) entourant la porte

**9.** Système de détection selon la revendication 8, **caractérisé en ce qu'**il est prévu un circuit électronique de valeur-seuil (2).

**10.** Système de détection selon l'une quelconque des revendication précédentes, **caractérisé en ce que** l'élément détecteur est un guide optique polymère sous la forme d'une fibre avec un élément central de fibre guide d'onde (15) et un élément d'enveloppe (14) entourant l'élément central.

**11.** Système de détection selon la revendication 10, **caractérisé en ce que** la fibre est transparente et présente une couche d'isolation (17) absorbant la lumière.

**12.** Système de détection selon l'une quelconque des revendications 8 à 11, **caractérisé en ce que** une préparation est prévue sur l'élément d'enveloppe (14), en particulier une zone partielle de l'élément d'enveloppe étant décapée.

**13.** Système de détection selon l'une quelconque des revendications 8 à 12, **caractérisé en ce que** le système de détection présente deux détecteurs contigus comme fibre double (19) pour l'introduction orientée de la partie de détecteur dans l'élément support dans un sens préférentiel entraînant des pertes de flexion maximales.

**14.** Système de détection selon l'une quelconque des revendications 8 à 13, **caractérisé en ce que** le détecteur est raccordé à un coupleur directif (90) à fibre optique ou avec optique intégrée et présente une extrémité de fibre réfléchie (80).

**15.** Système de détection selon la revendications 13 ou 14, **caractérisé en ce que**, si l'on utilise des détecteurs à double fibre, les deux fibres (191, 192) sont séparées après le décapage et leurs plans de section sont insérés de façon coïncidente dans le canal de fibre.

**16.** Système de détection selon l'une quelconque des revendications 8 à 15, **caractérisé en ce que** l'isolation (17) est à base d'un matériau rigide ou d'un matériau souple et imperméable à la lumière, en particulier du silicone ou une gaine thermorétractable.

**17.** Système de détection selon l'une quelconque des revendications 8 à 16, **caractérisé en ce que** il est prévu un détecteur transmetteur, des diodes électroluminescentes (30), des fiches de raccordement avec des injections de fibre optique en liaison avec la partie de fibre préparée (11) détectant, enfoncé dans l'élément support et une fibre de retour (13) étant prévue sur l'autre extrémité du détecteur.

**18.** Système de détection selon la revendications 17, **caractérisé en ce que** la fibre de retour est incorporée dans l'élément support et est préparée.

**19.** Système de détection selon l'une quelconque des revendications 17 ou 18, **caractérisé en ce que**

il est prévu une double fibre (19), une zone partielle de l'enveloppe de fibre étant enlevée sur des côtés juxtaposés ou opposés des fibres (191, 192) juxtaposées.

20. Système de détection selon l'une quelconque des revendications 8 à 16,
**caractérisé en ce que**
le détecteur est réflexif, la lumière traversant deux fois la partie (11) réfléchie côté extrémité.

21. Procédé pour fabriquer un détecteur à fibre optique selon l'une quelconque des revendications 1 à 7 ou d'un dispositif de détection selon l'une quelconque des revendications 8 à 20,
**caractérisé en ce que**
la fibre multimode ou les fibres multimode d'un détecteur (10) est/sont décapée(s) de façon que la surface de la zone décapée de la fibre est rugueuse ou pourvue d'une structure.

22. Procédé selon la revendication 21,
**caractérisé en ce que**
la fibre est bobinée sur un élément (61) de forme cylindrique et fixée sur celui-ci par des moyens (62), **en ce que** l'élément de forme cylindrique et préparé est serré dans un dispositif de rotation et la couche isolante des fibres est enlevée au tour jusqu'à l'élément d'enveloppe.

23. Procédé selon la revendication 22,
**caractérisé en ce que**
la vitesse de coupe est de cinquante jusqu'à quatre-vingt tours par minute.

24. Procédé selon la revendication 22 ou 23,
**caractérisé en ce que**
avec une vitesse de coupe élevée par rapport à l'étape du décapage au tour de la couche isolante et avec une vitesse d'avancement, le diamètre de noyau $d_k$ est réduit d'un décapage $a_v$.

25. Procédé selon la revendication 24,
**caractérisé en ce que**
la vitesse de coupe est de 100 à 150 mètres par minute et l'avancement moins de 0,1mm.

26. Procédé selon l'une quelconque des revendications 21 à 25,
**caractérisé en ce que**
la surface de la face décapée des fibres est poncée sur un détecteur à double fibre.

27. Procédé selon la revendication 21,
**caractérisé en ce que**
la fibre ou un système de guidage (72) passe dans une position définie avec précision devant un élément de fraise (71) d'une fraiseuse, le déplacement des fibres s'effectuant par l'enroulement de la fibre ou un entraînement moteur ou mécanique au choix.

28. Procédé selon la revendication 27,
**caractérisé en ce que**
avec des fraises (73, 74) décalées, deux plans de la fibre disposés perpendiculairement l'un par rapport à l'autre état sont traitées, l'engrènement de travail $a_H$ et $a_V$ étant réglable dans le sens horizontal et le sens vertical par le positionnement des moyens de guidage.

29. Procédé selon l'une quelconque des revendications 21 à 29,
**caractérisé en ce que**
un microcontour de la structure de surface est réalisé par l'utilisation d'un outil de coupe avec une extrémité pointue ou une arête de coupe structurée.

30. Procédé pour le contrôle des bordures de fermeture et/ou pour le contrôle de l'opération de fermeture de portes au moyen d'un système de détection selon l'une quelconque des revendications 8 à 20 ou fabriqué selon un procédé selon l'une quelconque des revendications 21 à 29,
**caractérisé en ce que**
un détecteur (10) est inséré dans un élément support (20) ou un élément de baguette élastique de la porte, **en ce qu'**un signal du détecteur peut être généré par l'exercice de pression sur l'élément de baguette, **en ce que** l'intensité du signal est détectée et une valeur seuil est interrogée, et **en ce que** l'opération de fermeture est interrompue ou annulée en cas de dépassement ou de sous-dépassement de la valeur-seuil.

31. Procédé selon la revendication 30,
**caractérisé en ce que**
la puissance du détecteur est interrogée et sa chute influe directement ou indirectement sur l'opération de fermeture de la porte.

32. Procédé selon la revendication 30 ou 31,
**caractérisé en ce que**
les pertes de flexion sont mesurées sur les fibres du détecteur dans lesquels de la lumière est injectée.

33. Procédé selon la revendication 32,
**caractérisé en ce que**
le signal détecteur $P_T$ transmis est enregistré.

34. Procédé selon l'une quelconque des revendications 30 à 33,
**caractérisé en ce que**
de la lumière surcouplée est détectée selon le principe d'un coupleur directif à fibre optique dans une fibre parallèle du détecteur lorsqu'on appuie sur une fibre d'arrivée lors de la charge.

**35.** Procédé selon l'une quelconque des revendications 30 à 34,

    **caractérisé en ce**

    **qu'**un niveau de lumière permanente ou la puissance de lumière transmise ou réfléchie $P_T$ ou $P_R$ est détectée pour un autotest du détecteur.

**36.** Procédé selon l'une quelconque des revendications 30 à 35,

    **caractérisé en ce que**

    le signal reçu est converti de façon optoélectronique, renforcé, contrôlé au niveau de l'intensité et comparé avec une valeur-seuil prédéfinie.

**37.** Dispositif de commutation avec l'utilisation d'un détecteur à fibre optique selon l'une quelconque des revendications 1 à 7.

Fig. 1

EP 1 049 916 B1

# Fig. 2

# Fig. 3

Fig. 4

ω

61

10

60

62

62

17

Fig. 5

63

10

$a_H$

$a_V$

D

16

18

Fig. 6

Fig. 7

Fig.8

# Fig. 9

EP 1 049 916 B1

Fig.10

EP 1 049 916 B1

Fig. 11

Fig. 12

EP 1 049 916 B1

28

191

19

193

16

192

Fig. 13

16

$a_v$

D

192

Fig. 14

Fig. 15

Fig. 16

Fig. 17

Fig. 18

Fig.19